# FASCICULE DE BREVET EUROPEEN

(11) **EP 1 364 755 B1**
(45) Date de publication et mention de la délivrance du brevet: **04.11.2009**
(21) Numéro de dépôt: 03291149.7
(22) Date de dépôt: 16.05.2003
(51) Int. Cl.: B25J 9/00

(54) **Exosquelette pour bras humain, notamment pour des applications spatiales**
Exoskelett für einen menschlichen Arm, insbesondere zur Verwendung in der Raumfahrt
Exoskeleton for a human arm, especially for spatial applications

(30) Priorité: 22.05.2002 FR 0206253
(43) Date de publication de la demande: 26.11.2003
(73) Titulaire: Organisation Intergouvernementale Dite Agence Spatiale Europeenne, 75738 Paris Cedex 15 (FR)
(72) Inventeur: Schiele, André, 2311 CP Leiden (NL); Visentin, Gianfranco, 2343 SX Oegstgeest (NL)
(74) Mandataire: MERH-IP Matias Erny Reichl Hoffmann

(56) Documents cités:
- WO-A-95/32842
- US-A- 4 575 297
- US-B1- 6 296 635
- BERGAMASCO M ET AL: "An arm exoskeleton system for teleoperation and virtual environments applications" ROBOTICS AND AUTOMATION, 1994. PROCEEDINGS., 1994 IEEE INTERNATIONAL CONFERENCE ON SAN DIEGO, CA, USA 8-13 MAY 1994, LOS ALAMITOS, CA, USA,IEEE COMPUT. SOC, 8 mai 1994 (1994-05-08), pages 1449-1454, XP010097703 ISBN: 0-8186-5330-2
- JAU B M: "A New Anthropomorphic Telerobot Servicer" PROCEEDINGS IEEE/RJS INTERNATIONAL WORKSHOP ON INTELLIGENT ROBOTS AND SYSTEMS, 4 septembre 1989 (1989-09-04) - 6 août 1989 (1989-08-06), pages 579-582, XP010257842 Tsukuba, Japan
- CALDWELL D G ET AL: "Dextrous exploration of a virtual world for improved prototyping" ROBOTICS AND AUTOMATION, 1998. PROCEEDINGS. 1998 IEEE INTERNATIONAL CONFERENCE ON LEUVEN, BELGIUM 16-20 MAY 1998, NEW YORK, NY, USA,IEEE, US, 16 mai 1998 (1998-05-16), pages 298-303, XP010281018 ISBN: 0-7803-4300-X

## Description

L'invention concerne un exosquelette pour bras humain.

Elle trouve plus particulièrement application, bien que non exclusivement, dans les technologies spatiales.

Il est tout d'abord utile de rappeler la signification du terme "exosquelette", plus particulièrement tel qu'il est utilisé dans le cadre de l'invention.

"Exosquelette" est un terme utilisé originellement en biologie pour désigner l'enveloppe support externe d'un animal. Par exemple, les arthropodes ont un exosquelette externe de chitine au lieu d'un squelette interne. Ces derniers temps, le terme a également été associé à des dispositifs structuraux destinés à être attachés autour de membres de personnes.

Plus récemment encore, une nouvelle catégorie de dispositifs a été ajoutée à la famille des exosquelettes : il s'agit de mécanismes utilisés, par exemple, pour augmenter des performances d'exécution humaines, en robotique ou encore dans des interactions de réalité virtuelle. D'autres applications possibles de ces mécanismes seront détaillées ci-après.

Pour fixer les idées, on se placera dans ce qui suit dans le cadre de l'application préférée de l'invention, à savoir l'application aux technologies spatiales. De façon plus précise encore, on considérera le cas de la télécommande d'un robot de type humanoïde travaillant à l'extérieur d'une station spatiale, par exemple la station spatiale internationale. Il peut s'agir, dans ce cadre d'application, du robot appelé "Eurobot" qui est censé fournir un moyen très précis et adroit d'intervention pour l'inspection, la maintenance et la réparation de matériel dans l'environnement fortement hostile de l'espace. Le robot est équipé de trois bras cinématiquement semblables aux bras humains (c'est-à-dire notamment dotés de sept degrés de liberté). Pendant la majeure partie du temps, le robot est programmé pour accomplir des tâches préétablies, mais dans certains cas le robot doit être télécommandé :
- soit par des astronautes à l'intérieur de la station spatiale, ou
- soit directement par des opérateurs restés sur terre.

Dans les deux cas, le besoin de manipulations très précises a imposé l'utilisation de techniques dites d'immersion. Pour ce faire, l'opérateur porte des lunettes vidéo, des gants à retour de force et un ou des exosquelette(s) de bras pour ressentir les sensations du robot, c'est-à-dire celles qu'il aurait ressenties s'il avait effectué lui-même les tâches exécutées par le robot.

La nécessité de créer un exosquelette compatible avec des opérateurs à terre ou des astronautes n'est pas non plus sans contraintes. Il est en effet nécessaire de réaliser un système léger (typiquement moins de 5 kg), compact et facile à porter.

Les exosquelettes de l'état de la technique souffrent généralement de divers inconvénients et/ou insuffisances, tels que les suivants :
- Impossibilité de ressentir tous les mouvements du bras humain et d'obtenir des forces et des couples de rétroaction, ce sans limiter la gamme normale des mouvements humains de bras. Il est notamment nécessaire d'obtenir des informations sur la position de l'épaule, du coude et du poignet.
- Difficulté de réaliser un système réellement "portable", ce qui signifie que les mouvements de l'opérateur ne devraient pas être limités pendant l'utilisation (tourner autour d'un objet, se pencher, marcher, etc.).
- Adaptation limitée, ce qui, par exemple, ne permet pas d'utiliser le même exosquelette, sans modification importante, pour un pourcentage élevé de la population masculine, typiquement dans une gamme couvrant 5% à 95%.

Plus précisément, les exosquelettes de bras humains doivent surmonter un problème principal, à savoir l'imitation de la cinématique des articulations humaines complexes d'épaule, de coude et de poignet. La difficulté dans l'imitation résulte du fait que ces articulations sont étroitement enveloppées, avec leurs axes de rotation se déplaçant avec la posture changeante du bras. Les exosquelettes selon l'état de la technique se sont efforcés d'approcher le problème de l'épaule par la mise oeuvre d'un mécanisme qui repose sur le dessus arrière de l'épaule humaine. Les imperfections de cette approche peuvent être trouvées dans l'encombrement et la masse du mécanisme. Celui-ci pèse d'ailleurs aussi sur le bras. En ce qui concerne le poignet, des solutions également massives ont été utilisées.

En général, on constate aussi que, dans les mécanismes d'exosquelette connus, les articulations complexes de cinématique du bras humain sont simplifiées et assimilées à des articulations à un seul degré de liberté, ci-après appelé "DOF" (pour "Degree Of Freedom", selon la terminologie anglo-saxonne couramment utilisée) dans un but de simplification de la description. L'inconvénient de cette solution est que le mouvement normal du bras dit "maître" (qui impose les actions) est perturbé et une sensation de confort, lors du fonctionnement du bras dit "esclave" (rétroaction de force) n'est pas possible.

Sans que cela soit exhaustif, on va maintenant décrire brièvement quelques solutions connues et montrer leurs limites.

Le brevet américain US 4 575 297 A (Hans Richter) décrit un robot comportant une plaque de poitrine, un membre supérieur de bras, un membre inférieur de bras ayant des unités de doigt et de pouce dans lesquelles les membres humains sont insérés. Un opérateur humain, à qui ces membres de robot sont attachés, s'assied sur une structure de soutènement telle qu'une chaise mobile. Les membres de robot, leurs longueurs, les articulations entre les membres et les axes communs correspondent à ceux de l'opérateur humain. Chaque articulation est associée à un dispositif capteur moteur hydraulique. La partie robotique d'épaule est limitée aux mouvements autour de deux axes. Un autre axe permet la flexion ou la prolongation de coude. Un axe parallèle à l'axe de l'avant-bras permet la rotation de l'avant-bras. Sur le poignet, un raccord articulé, qui est parallèle à l'articulation articulée du coude, fournit le moyen d'un mouvement humain de poignet.

Le mécanisme d'exosquelette enseigné par le brevet précité copie la cinématique normale d'un bras humain. Chaque articulation actionnée est commandée par des vérins hydrauliques, qui sont directement montés à côté des articulations. La gamme de mouvements permise est relativement limitée. En particulier, un mouvement sans répercussions n'est pas possible.

Le brevet américain US 5 967580 A (Mark E. Rosheim) est relatif à une paire d'articulations connectées et à des moyens de génération de force pour leur mise en oeuvre dans des systèmes robotiques esclaves. Le brevet est relatif à un manipulateur mécanique anthropomorphe, fournissant certaines des possibilités d'un thorax humain et des possibilités de mouvement semblables à ceux de la poitrine, de l'épaule, du bras, du poignet et des mains d'un humain. De nouveau, la structure cinématique du robot décrit dans le brevet précité ressemble à la structure cinématique d'un bras humain. Il s'ensuit que l'on désire fournir un manipulateur mécanique ressemblant au thorax humain supérieur et au bras, et pouvant être pourvu de possibilités de mouvements sensiblement équivalents à ceux du thorax et du bras humains supérieurs. Une structure mécanique fournit le moyen d'engager les mains d'un opérateur.

Un mécanisme de contre-partie peut être utilisé comme exosquelette pour commander le robot esclave, mais n'est pas optimisé pour cet usage en tant que tel. On peut fournir des données de force tactile en rétroaction seulement à la partie de l'exosquelette équivalente à la main. Les deux mécanismes sont équivalents à la structure supérieure humaine de membre en termes de cinématique (paramètres des membres et des articulations). Chaque axe de rotation est directement commandé par les moteurs linéaires à courant continu. Seulement une gamme très limitée de mouvements humains normaux de bras peut être couverte avec le mécanisme d'exosquelette décrit. Comme indiqué ci-dessus, la rétroaction de force est seulement possible sur la main humaine, cette caractéristique étant l'objet principal de ce brevet.

Le brevet américain US 6 301526 A (Mun Sang Kim et al.) concerne à titre principal un dispositif ayant une fonction de force de rétroaction et qui est monté sur un bras humain. Celui-ci peut renvoyer en rétroaction une information de limite d'opération par l'utilisation des freins moteurs. Le dispositif principal est une configuration en chaîne, de type série, fixée sur le dos d'un opérateur. Des deuxièmes et troisièmes moyens de combinaison sont fixés au-dessus et au-dessous du coude, de même qu'un quatrième moyen de combinaison est fixé sur une partie arrière de la main. Sept axes d'exosquelette comportent des unités de frein électriques pour générer des couples. Des unités de détermination de position, ainsi que des unités de boîte de vitesse pour amplifier les couples, sont associées aux unités d'actionnement.

La base de la chaîne cinématique est fixée sur le dos de l'opérateur et pas sur la poitrine. Le mouvement d'exosquelette peut seulement être influencé par des freins électriques passifs, qui peuvent seulement être utilisés pour atténuer les mouvements normaux du bras humain.

La demande de brevet internationale WO 95/32842 A2 (AN, Bin) concerne un système qui a le même degré de liberté que le bras humain, et donc qui doit être étroitement fixé au bras humain. Le système est également cinématiquement équivalent au bras d'un opérateur. L'exosquelette est fixé sur le dos de l'opérateur et n'importe quel composant qui forme interface avec le corps humain est réglable. Il s'ensuit que n'importe quel défaut d'alignement entre l'opérateur et le système impose des contraintes cinématiques aux articulations humaines et cause un grand inconfort et une gêne pour un mouvement anatomique normal. Cette invention concerne principalement le problème de la fixation à l'opérateur, problème qui a été résolu avec les caractéristiques de conception particulières.

La cinématique est limitée à seulement cinq degrés de liberté. Les mouvements de la ceinture d'épaule, comme les mouvements du poignet, ne sont jamais discernables ni contrôlables. Chaque axe est actionné directement par un dispositif à moteur à courant continu, qui est monté près d'un axe commun d'articulation approprié. De par sa structure cinématique très simplifiée, beaucoup des composants sont à considérer comme devant être réglés. La base de exosquelette est fixée sur une partie supérieure du dos de l'opérateur.

Le document D1 "An Arm Exoskeleton System for Teleoperation and Virtual Environments Applications" (M. Bergamasco et al.) - Robotics and Automation, 1994 Proceedings 1994 IEEE International Conference, San Diego, Ca, USA 8 au 13 mai 1994, Los Alamitos, Ca, USA, IEEE Comput. Soc pages 1449-1454, décrit un système d'exosquelette de bras pour des applications de téléopération et d'environnement virtuel comprenant un système de retour de force externe composé de sept degrés de liberté et un exosquelette enveloppant l'ensemble du bras et supporté, au moyen d'une structure de poitrine conçue à cet effet, par les épaules et le tronc de l'opérateur humain. Chaque articulation de l'exosquelette est actionnée au moyen de servomoteurs à courant continu et le mouvement de chaque articulation est obtenu grâce à un système de transmission basé sur la tension des tendons.

On constate que les exosquelettes de l'art connu, dont quelques-uns viennent d'être décrits, présentent des limitations importantes et ne permettent pas de répondre entièrement aux besoins qui se font sentir, notamment pour les applications spatiales. Les exosquelettes selon l'art connu sont, pour la plupart, basés sur un mécanisme qui vise à d'imiter ou de se rapprocher au mieux de la cinématique des membres humains. Enfin, comme il ressortira de la description de l'invention qui va suivre, les mécanismes des exosquelettes selon l'art connu présentent des différences structurelles importantes avec le mécanisme mis en oeuvre dans l'invention.

Cet objet est atteint par un exosquelette possédant les caractéristiques de la revendication 1.

L'invention vise, tout à la fois, à pallier les inconvénients des dispositifs de l'art connu, et dont certains viennent d'être rappelés, et à répondre aux besoins qui se font sentir, et qui ont été également rappelés.

L'invention se fixe pour but un exosquelette pour bras humain présentant, notamment, tous les degrés de liberté de celui-ci, qui soit léger, portable, car ne limitant pas les mouvements de l'opérateur, adaptable à un large pourcentage de la population, sans modifications sensibles, qui permet de ressentir tous les mouvements du bras humain, ne limite pas la gamme de mouvements naturels, et soit confortable.

Pour ce faire, et de façon pratique, la structure d'un exosquelette conforme à l'invention présente les caractéristiques essentielles suivantes :

L'exosquelette de bras selon l'invention ressemble, en ce qui concerne sa base support, à une moitié d'un dessus d'armure. Il comporte deux plaques rigides de poitrine (avant et dos) et une manche articulée. Les plaques de poitrine sont fixées au thorax de l'opérateur par des sangles ou tous moyens appropriés équivalents. La plaque avant sert de base structurale à une chaîne d'articulations qui articule la manche. Elle fournit une référence fixe pour tout mouvement de l'exosquelette. La plaque arrière supporte des moteurs qui déplacent les articulations de manche. Les moteurs et les articulations sont reliés par une série de tendons flexibles qui les actionnent.

L'exosquelette selon l'invention présente plusieurs caractéristiques techniques avantageuses.

Selon une première caractéristique importante, la cinématique propre à un exosquelette conforme à l'invention est conçue de façon spécifique. Il n'y a aucune tentative d'imiter la cinématique de l'épaule, du coude et/ou du poignet humains. Tout au contraire, une chaîne alternative de cinématique à seize degrés de liberté, offrant la même liberté de mouvement, est disposée parallèlement aux articulations humaines. Cette chaîne et les articulations humaines forment une boucle cinématique fermée qui :
- pour l'épaule commence à l'attache du bras (au sternum), s'étend au-dessus des articulations et des extrémités scapulo-claviculaire et gléno-humeral et se termine au milieu de l'humérus ;
- pour le coude commence au milieu de l'humérus et se termine au milieu de l'avant-bras ; et
- pour le poignet commence au milieu de l'avant-bras et se termine au milieu de la paume de main.

Bien que la cinématique parallèle de l'exosquelette soit différente de celle du bras, chaque posture des articulations humaines peut être déterminée de façon univoque par la posture correspondante de la chaîne de cinématique d'exosquelette.

Les avantages apportés de cette approche sont nombreux et peuvent être résumés comme suit :
- Le poids du système n'est pas porté par le bras mais par le thorax.
- La gamme complète de mouvements d'épaule, de coude et de poignet est possible.
- Les articulations elles-mêmes sont plus simples et plus réduites
- II n'est pas nécessaire d'aligner les axes des articulations humaines avec celles de l'exosquelette : il s'ensuit qu'aucune procédure d'ajustement longue et complexe n'est nécessaire avant que l'exosquelette soit opérationnel.

La base de l'exosquelette est une partie du corps humain. Par conséquent, l'exosquelette peut être conçu comme un système portable qui fournit plus de flexibilité pour les mouvements généraux de l'opérateur. Par l'utilisation d'un contrôleur portable d'exosquelette, des télécommandes en apesanteur, ou pour le moins en micro-pesanteur, sont très simplifiées parce qu'aucune force résultante sur le corps de l'opérateur ne peut causer un mouvement qui l'éloigne de la station de commande. A titre exemple, si on utilise des manettes à force de rétroaction, du type "joysticks" (selon la terminologie anglo-saxonne), celles-ci créent des forces contre le corps de l'astronaute, qui le repoussent loin de la manette. Par conséquent, il doit être attaché en un endroit approprié et ses possibilités opérationnelles sont ainsi limitées.

Une deuxième caractéristique importante tient au fait que toutes les articulations actionnées dans l'exosquelette (c'est-à-dire non passives) sont commandées par des transmissions à tendons à câble. Dans l'art connu, on recourt habituellement à des organes de commande électriques directement montés sur l'exosquelette. Ces dispositions rendent l'exosquelette encombrant, lourd et exigent un nombre important d'unités de commande précisément pour pouvoir accommoder un poids élevé. L'utilisation des tendons à câble selon l'invention permet de placer les unités de commande sur une plaque arrière de l'exosquelette. Le poids des organes de commande est donc porté par le thorax. Le résultat obtenu est un bras extrêmement léger qui peut être commandé par de plus petits organes de commande.

Une troisième caractéristique importante est relative à l'adaptation possible de l'exosquelette conforme l'invention à différents sujets humains. En effet, ses caractéristiques structurelles spécifiques, qui seront détaillées ci-après permettent l'adaptation possible du bras maître à pratiquement n'importe quel sujet humain (gamme de pourcentages précitée). Les ajustements requis pour adapter l'exosquelette peuvent être effectués tout en le portant et sont limités typiquement à serrer deux vis ou organes équivalents, comme il le sera montré également ci-après.

L'invention a donc pour objet principal un exosquelette de bras destiné à acquérir des données représentatives de mouvements des articulations de bras d'un corps humain à l'aide de capteurs de mesure et/ou à appliquer des couples à l'aide d'unités d'activation associées à au moins une partie desdites articulations, ledit exosquelette comprenant un premier dispositif ayant la conformation d'une manche, destinée à être enfilée sur au moins un desdits bras, de façon à former une chaîne cinématique d'articulations disposé parallèlement aux dites articulations de bras, ledit dispositif comprenant un premier sous-ensemble dit exosquelette d'épaule comprenant un premier nombre déterminé d'articulations associées aux articulations d'épaule dudit corps humain, un deuxième sous-ensemble dit exosquelette de coude comprenant un deuxième nombre déterminé d'articulations associées aux articulations de coude dudit corps humain et un troisième sous-ensemble dit exosquelette de poignet comprenant un troisième nombre déterminé d'articulations associées aux articulations de poignet dudit corps humain, la somme des premier, deuxième et troisième nombres déterminés d'articulation étant égal à seize, de manière à autoriser seize degrés de liberté, et lesdites unités d'activation étant commandés par des tendons flexibles courant le long desdits sous-ensembles, lesdits premier à troisième sous-ensembles étant mécaniquement dissociés de manière à pouvoir être commandés individuellement par lesdits tendons flexibles, et ledit exosquelette comprenant un deuxième dispositif, formant support, porté par le thorax dudit corps humain, comprenant une plaque rigide avant, dite de poitrine, et une plaque rigide arrière, dite de dos, en ce que ledit exosquelette d'épaule est fixé en son extrémité proximale à ladite plaque avant, celle-ci fournissant une référence fixe pour tout mouvement dudit exosquelette.

L'invention a encore pour objet l'application d'un exosquelette de bras à la télécommande d'un robot de type humanoïde travaillant à l'extérieur d'une station spatiale spatial muni de bras artificiels et effectuant des tâches sous la commande d'un opérateur humain, ledit exosquelette de bras étant enfilé sur l'un au moins de ses bras, ledit robot recevant des données forçant l'exécution de mouvements en relation biunivoque avec des mouvements dudit bras et transmettant des données dites de rétroaction forçant l'exécution de mouvements de tout ou partie desdites articulations dudit exosquelette de bras et entraînant des mouvements correspondants dudit bras.

L'invention va maintenant être décrite de façon plus détaillée en se référant aux dessins annexés, parmi lesquels :
- les figures 1A et 1B illustrent schématiquement un exemple de réalisation d'un exosquelette de bras selon l'invention porté par un opérateur, en vue de face et arrière, respectivement ;
- la figure 2 est une vue éclatée illustrant les trois sous-ensembles principaux d'un exosquelette selon un mode de réalisation préféré de l'invention : les sous-ensembles de poignet, de coude et d'épaule, respectivement ;
- la figure 3A illustre de façon plus détaillée le sous-ensemble de poignet de l'exosquelette de la figure 2, en vue de face, porté par la main d'un opérateur ;
- la figure 3B est une représentation schématique, en trois dimensions, illustrant les différentes articulations associées au sous-ensemble de poignet de l'exosquelette de la figure 3A et leurs axes de rotation ;
- les figures 3C1 à 3C3 illustrent un premier organe du sous-ensemble de poignet de l'exosquelette de la figure 3A, en trois dimensions, en vue de côté et une coupe de la figure 3C2, respectivement ;
- les figures 3D1 à 3D3 illustrent un premier organe du sous-ensemble de poignet de l'exosquelette de la figure 3A, en trois dimensions, en vue de dessus et une coupe de la figure 3D2, respectivement ;
- les figures 3E1 à 3E3 illustrent un troisième organe du sous-ensemble de poignet de l'exosquelette de la figure 3A, en trois dimensions, en vue de côté et une coupe de la figure 3E2, respectivement ;
- les figures 3F1 à 3F3 illustrent un quatrième organe du sous-ensemble de poignet de l'exosquelette de la figure 3A, en trois dimensions, en vue de dessus et une coupe de la figure 3F2, respectivement ;
- les figures 3G1 à 3G3 illustrent un cinquième organe du sous-ensemble de poignet de l'exosquelette de la figure 3A, en trois dimensions, en vue de côté et une coupe de la figure 3G2, respectivement ;
- les figures 3H1 à 3H3 illustrent un sixième organe du sous-ensemble de poignet de l'exosquelette de la figure 3A, en trois dimensions, en vue de face et une coupe de la figure 3H2, respectivement ;
- la figure 4A illustre de façon plus détaillée le sous-ensemble de coude de l'exosquelette de la figure 2, dans l'espace en vue de face, enfilé sur le bras d'un opérateur et attaché à son coude ;
- la figure 4B est une représentation schématique, en trois dimensions, illustrant les différentes articulations associées au sous-ensemble de coude de l'exosquelette de la figure 4A, et leurs axes de rotation ;
- les figures 4C1 et 4C2 illustrent de façon plus détaillée, en vues de côté et de dessus respectivement, le faisceau de tendons et l'unité de pré-charge du sous-ensemble de coude des figures 4A et 4B ;
- les figures 4D1 à 4D3 illustrent de façon plus détaillée, les organes d'une des articulations du sous-ensemble de coude de l'exosquelette des figures 4A et 4B, en vues de côté et de dessus respectivement, en trois dimensions, en vue de haut et une coupe de la figure 4D2, respectivement ;
- les figures 5A et 5B illustrent de façon plus détaillée le sous-ensemble d'épaule de l'exosquelette de la figure 2, enfilé sur le bras d'un opérateur et attaché à son épaule, en vue de trois-quarts dessus et vue de face, respectivement ;
- la figure 5C est une représentation schématique, en trois dimensions, illustrant les différentes articulations associées au sous-ensemble d'épaule de l'exosquelette des figures 5A et 5B, et leurs axes de rotation ;
- la figure 5D illustre, en vue arrière, le mécanisme de pré-tension de tendons associé au sous-ensemble d'épaule de l'exosquelette des figures 5A et 5B ;
- les figures 5E1 à 5E3 illustrent de façon plus détaillée un premier organe du sous-ensemble d'épaule de l'exosquelette des figures 5A à 5D, en trois dimensions, en vue de haut et une coupe de la figure 5E2, respectivement ;
- les figures 5F1 à 5F4 illustrent de façon plus détaillée un deuxième organe du sous-ensemble d'épaule de l'exosquelette des figures 5A à 5D, constitué par une articulation télescopique, à l'état allongé, en vues de côté et en coupe, et à l'état compressé, en vue de côté et en coupe, respectivement ;

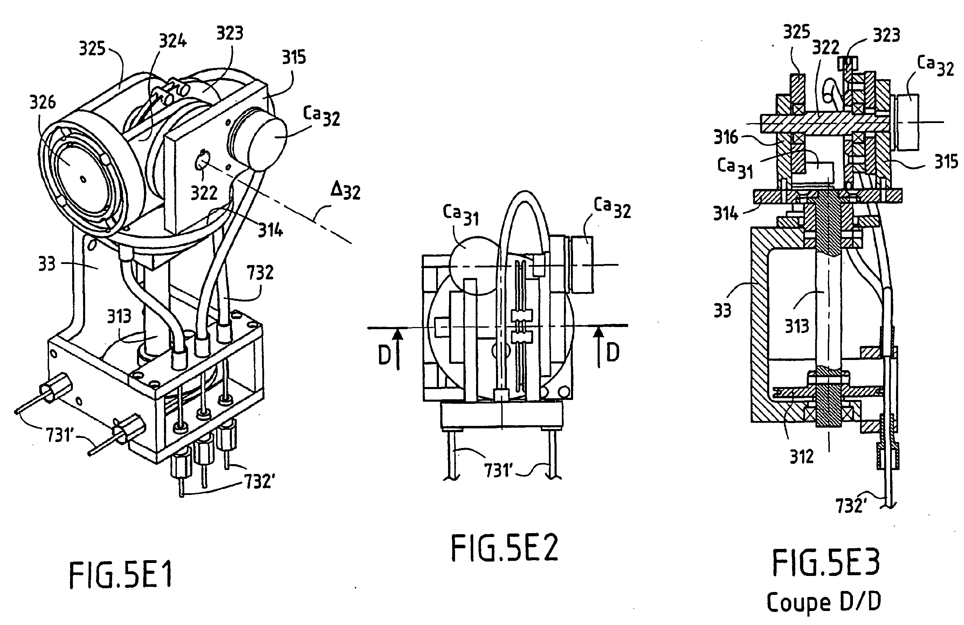

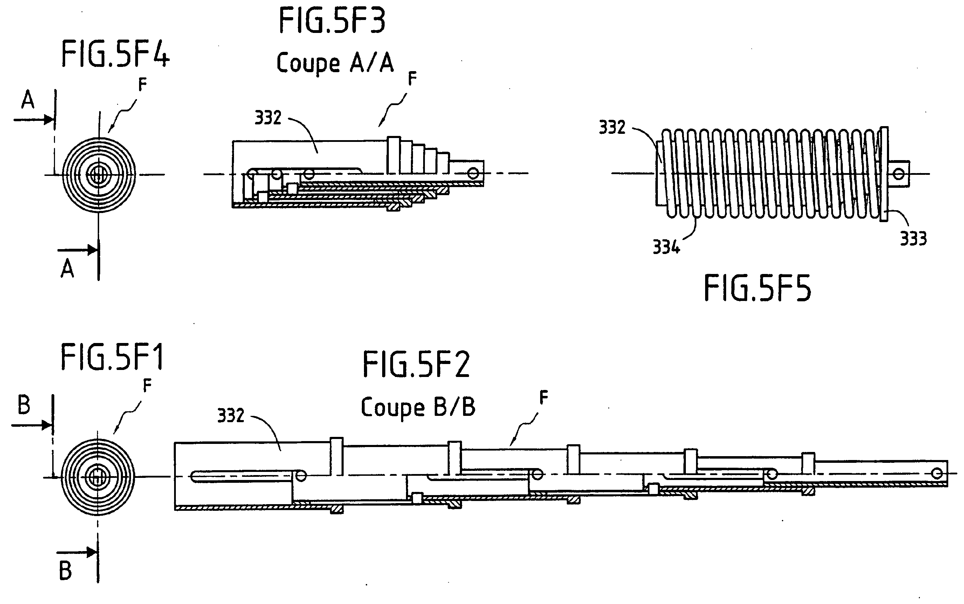

- la figure 5F5 illustre un détail de l'articulation télescopique des figures 5F1 à 5F4 ;

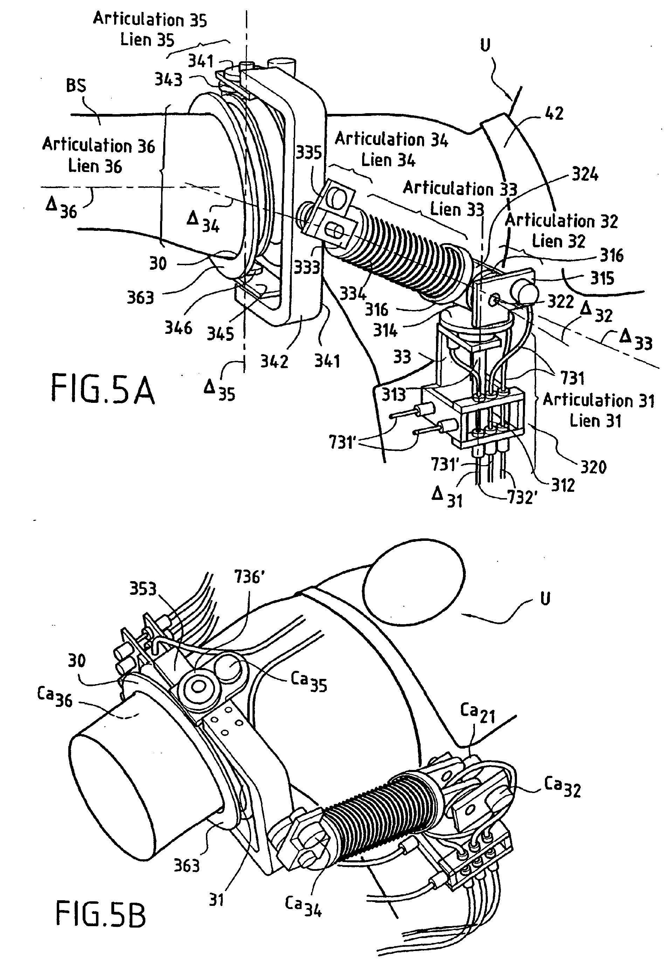

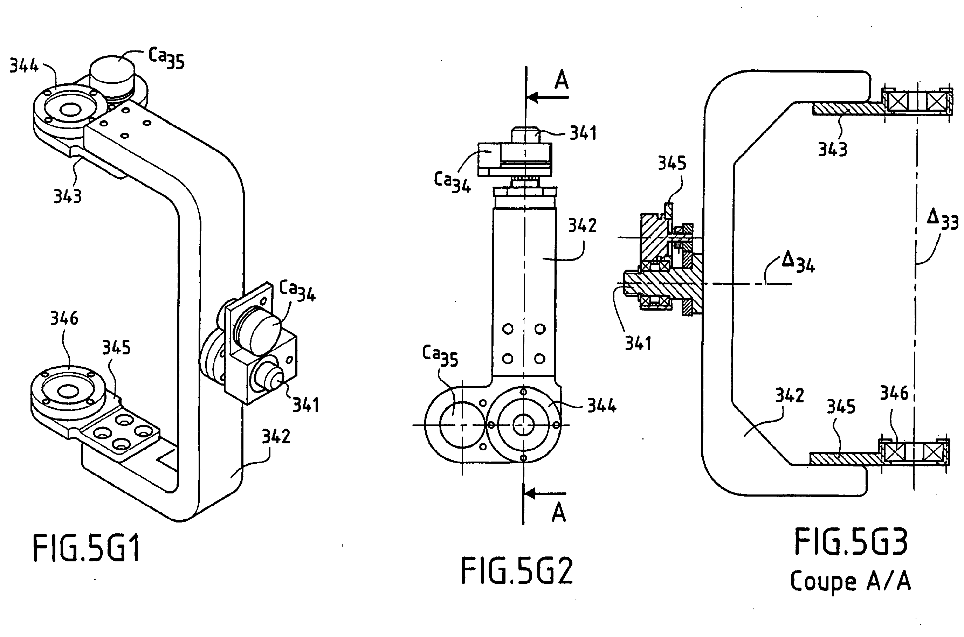

- les figures 5G1 à 5G3 illustrent de façon plus détaillée un troisième organe du sous-ensemble d'épaule de l'exosquelette des figures 5A à 5D, en trois dimensions, en vue de haut et une coupe de la figure 5G2, respectivement ;

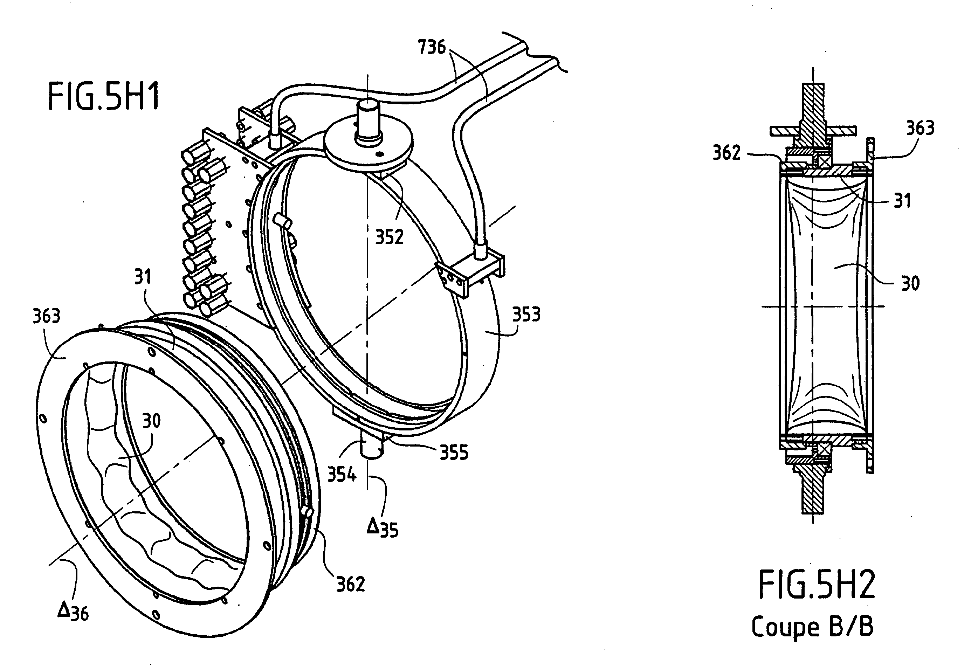

- les figures 5H1 et 5H2 illustrent de façon plus détaillée un troisième organe du sous-ensemble d'épaule de l'exosquelette des figures 5A à 5D, comprenant un coussin gonflable, en trois dimensions et en coupe, respectivement ;

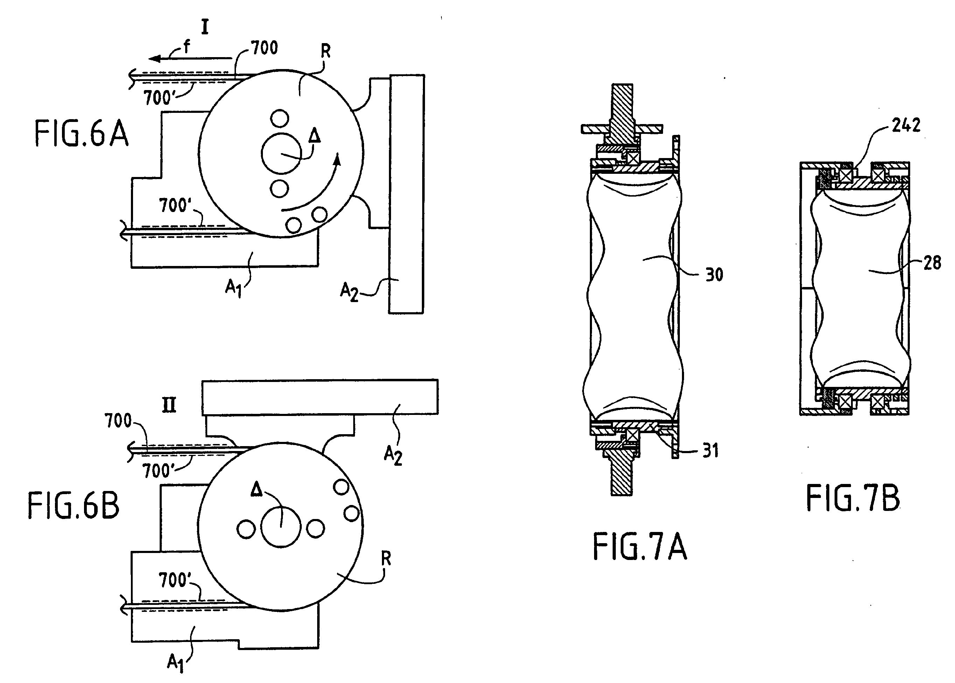

- les figures 6A à 6C illustrent schématiquement le mécanisme d'activation d'articulations de l'exosquelette selon l'invention par l'intermédiaire de tendons à câble

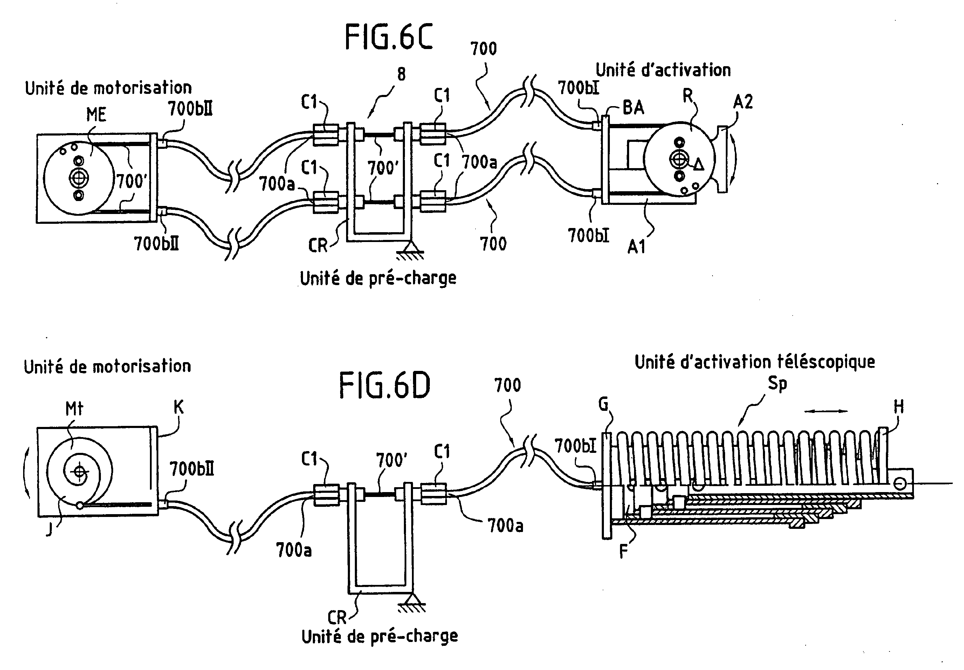

- la figure 6D illustre schématiquement le mécanisme d'activation de l'articulation télescopique des figures 5F1 à 5F5 ; et
- les figures 7A et 7B illustrent, en coupe sagittale, des organes de fixations à coussin gonflable pour le bras et l'avant bras, respectivement.

Dans ce qui suit, comme il a été indiqué et sans en limiter en quoi que ce soit la portée, on se placera ci-après dans le cadre de l'application préférée de l'invention, c'est-à-dire dans le cas des opérations de télécommande par un opérateur (un astronaute par exemple) d'un robot spatial, de type humanoïde travaillant à l'extérieur d'une station spatiale, l'opérateur portant un exosquelette de bras selon l'invention.

Le robot, en tant que tel, ne participe pas directement à l'invention et n'a pas été représenté sur les figures. *A priori,* tout robot de l'art connu peut être mis en oeuvre dans le cadre de l'invention, ce sans nécessiter de modifications.

De façon bien connue en soi, pour des applications de ce type, on prévoit habituellement des communications de données entre le robot et une station fixe, dans la station spatiale et/ou la terre, voire directement entre le robot et un système de traitement de données associé à l'exosquelette. On peut utiliser tout moyen de transmission bidirectionnels de données, avantageusement des moyens d'émission/réception radio-électriques.

Les données "aller" consistent en des ordres transmis au robot pour l'actionner, ce en fonction de mouvements particuliers que l'opérateur imprime à l'exosquelette. Le robot reproduit les mouvements de l'exosquelette. En sens inverse, il envoie des données que l'on appellera de "rétroaction" permettant à l'opérateur "ressentir physiquement" les forces et couples subis par le robot, et non pas seulement "visuellement", par exemple en suivant les tâches exécutées par le robot sur un écran de visualisation.

Cette rétroaction sur l'opérateur est très importante, car elle permet, par exemple, de doser précisément les forces et couples précités exercés par le robot téléguidé.

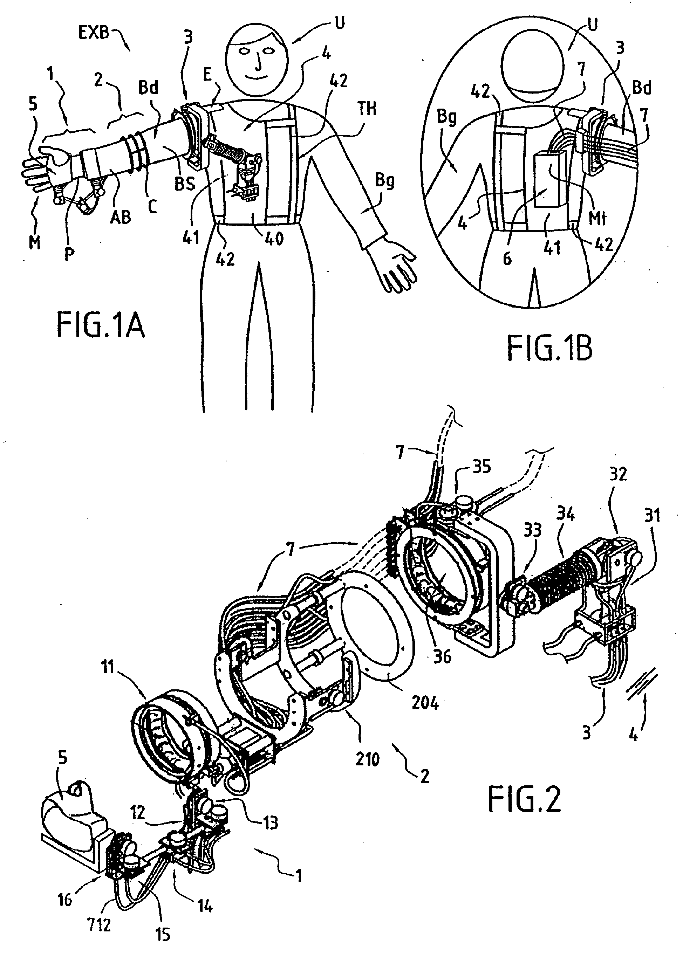

Un exemple pratique d'un exosquelette de bras selon un mode de réalisation préféré de l'invention va maintenant être décrit par référence aux figures 1A à 7B. Sur ces figures, les éléments identiques portent les mêmes références et ne seront re-décrits qu'en tant que de besoin.

Les figures 1A et 1B illustrent schématiquement un exemple d'exosquelette de bras *EXB* selon un mode de réalisation préféré l'invention et ses principaux composants. L'exosquelette de bras *EXB* est représenté porté par un opérateur *U*, en vue de face (figure 1A) et vue partielle arrière (figure 1B), respectivement.

Comme précédemment indiqué, l'exosquelette de bras *EXB* proprement dit comporte trois sous-ensembles principaux : un sous-ensemble de poignet 1, un sous-ensemble de coude 2 et un sous-ensembles d'épaule 3, respectivement. Ces trois sous-ensembles, 1 à 3, sont dédiés à la détection de mouvements relatifs du poignet *P*, du coude C et de l'épaule *E* d'un opérateur *U* et à l'actionnement des articulations associées. Ils forment une manche enfilée sur l'un de ses bras, par exemple le bras droit *Bd.*

Sur les figures 1A et 1B, les sous-ensembles, 1 à 3, de l'exosquelette de bras *EXB* sont représentés enfilés sur le bras droit *Bd* de l'opérateur *U*, car on suppose que celui-ci est droitier. Naturellement, le dispositif selon l'invention n'est en rien limité à cette caractéristique. Il peut tout aussi bien être enfilé sur le bras gauche *Bg* de l'opérateur *U* ou, sur les deux bras, sans sortir du cadre de l'invention.

Ces trois sous-ensembles, 1 à 3, forment une chaîne cinématique, dont les caractéristiques spécifiques vont être décrites ci-après. Cette chaîne est représentée de façon plus détaillée en éclaté sur la figure 2.

Selon une autre caractéristique importante de l'invention, la chaîne cinématique précitée, plus précisément, par le sous-ensemble de poignet 1, est fixée à un gant 5 enfilé sur une des mains ou sur toutes les deux, *M* de l'opérateur, dans le cas présent sur sa main droite.

Selon une autre caractéristique importante encore de l'invention, la chaîne cinématique précitée, plus précisément, par le sous-ensemble d'épaule 3, est fixée au thorax *TH* de l'opérateur *U*, à l'aide d'une base support 4.

Dans un mode de réalisation préféré, la base support 4, ressemble à une moitié d'armure. Elle comporte deux plaques rigides de poitrine : devant 40 (figure 1A) et dos 41 (figure 1B). Les plaques de poitrine, 40 et 41, sont fixées au thorax *TH* de l'opérateur *U* par des sangles 42, ou tous moyens appropriés équivalents. La plaque de devant 40 sert de base structurale à la chaîne d'articulations des sous-ensembles 1 à 3. Elle fournit une référence fixe pour tout mouvement de l'exosquelette de bras *EXB.*

Selon une autre caractéristique importante encore de l'invention, les différents sous-ensembles, 1 à 3, de la chaîne cinématique précitée sont reliés entre eux. Des faisceaux de tendons flexibles 7 du type à câble actionnent des articulations particulières associées aux sous-ensembles 1 à 3, articulations dites "actives" et sont actionnés à leur tour par des moteurs *Mt* (figure 1B).

En réalité, les tendons flexibles sont constitués par deux types d'éléments distincts ; des câbles proprement dits et des gaines de type spiralé guidant les câbles sur tout ou partie de leurs longueurs. Sur les figures, la partie visible des faisceaux 7 est constituée essentiellement par les gaines.

C'est à l'aide des articulations actives précitées que des forces et/ou couples de rétroaction pourront être imprimés à l'exosquelette de bras *EXB,* de façon à être ressentis par l'opérateur *U*.

Il y a deux faisceaux de câbles différents, que l'on appellera arbitrairement "faisceau N° 1" et "faisceau N° 2". Un premier faisceau mène à partir du dos de l'opérateur *U* jusqu'à une unité de pré-charge dans le sous-ensemble d'épaule 3 et, enfin, à partir de là le long de la structure à l'unité de charge initiale l'assemblage de coude et à partir de là plus loin jusqu'au poignet *P*. Le second faisceau mène directement à partir du dos jusqu'à des articulations avant de pénétrer dans une unité de pré-charge à la base de l'exosquelette *EXB*.

Par contraste, d'autres articulations, dites "passives", pouvant cependant être associées à des capteurs de mouvement, permettent les mouvements du bras humain *Bd* de l'opérateur *U*, éventuellement les détectent et transmettent des données de mouvement correspondantes, mais n'exercent ni force ni couple sur le bras humain *Bd.* A titre d'exemple, des capteurs référencés à Ca₁₆, Ca₂₁ à Ca₂₃, Ca₃₁ à Ca₃₆, 218 et 226, ont été représentés sur différentes figures annexées à la présente description.

La plaque arrière 41 supporte les moteurs précités *Mt*. Comme illustré par la figure 1B, on a supposé que les moteurs *Mt* (non explicitement représentés) étaient disposés à l'intérieur d'un boîtier 6 fixé à la plaque 41. De façon avantageuse, on utilise des moteurs à courant continu.

Le boîtier 6 est notamment relié à la chaîne cinématique, et plus particulièrement au sous-ensemble d'épaule 3, par le faisceau de tendons 7.

Le boîtier 6 comprend également des circuits d'émission-réception de données et d'instructions communiquant directement avec le robot à télécommander ou via une station intermédiaire (non représentée).

Les moteurs *Mt* actionnent une ou plusieurs articulations des sous-ensembles 1 à 3 en agissant sur des tendons flexibles correspondants du faisceau 7, de la manière qui sera précisée ci-après.

On va maintenant détailler de façon plus précise la chaîne cinématique.

Dans sa globalité, le bras maître de l'exosquelette *EXB* comporte seize articulations, et donc seize degrés de la liberté ou "DOF". Chaque axe est équipé d'un capteur d'angle pour obtenir des informations sur les angles (mouvement de rotation autour d'un axe particulier) d'articulation.

Les articulations sont regroupées, comme rappelé, en trois sous-ensembles :
- le sous-ensemble de poignet 1 (qui comporte six "DOF") ;
- le sous-ensemble de coude 2 (qui comporte quatre "DOF") ; et
- le sous-ensemble d'épaule 3 (qui comporte six "DOF")

La figure 2 illustre un ensemble éclaté de ces trois mécanismes, 1 à 3, reliés par un faisceau de tendons flexibles 7.

Selon une des caractéristiques essentielles de l'invention, le bras maître n'est pas conçu pour imiter l'arrangement des articulations humaines, mais pour les relier par une chaîne cinématique alternative d'articulations disposée au-dessus du membre humain : bras *Bd* dans l'exemple décrit. Chacune de ces trois sous-ensembles, 1 à 3, représente donc une structure alternative pour le poignet *P*, le coude *C* et l'épaule *E* (figure 1A).

On va maintenant décrire de façon plus détaillée les trois sous-ensembles, 1 à 3, de la chaîne cinématique de l'exosquelette de bras *EXB.* Pour des raisons de facilité de description, on commencera par le sous-ensemble d'épaule 3.

Les figures 5A et 5B illustrent le sous-ensemble d'épaule 3, en vue de face et de trois-quarts haut, respectivement. Sur ces figures, la tête de l'opérateur U n'est pas représentée et le faisceau de tendons flexibles 7 est coupé. Il sera fait également référence aux figures de détail 5E1 à 5H2.

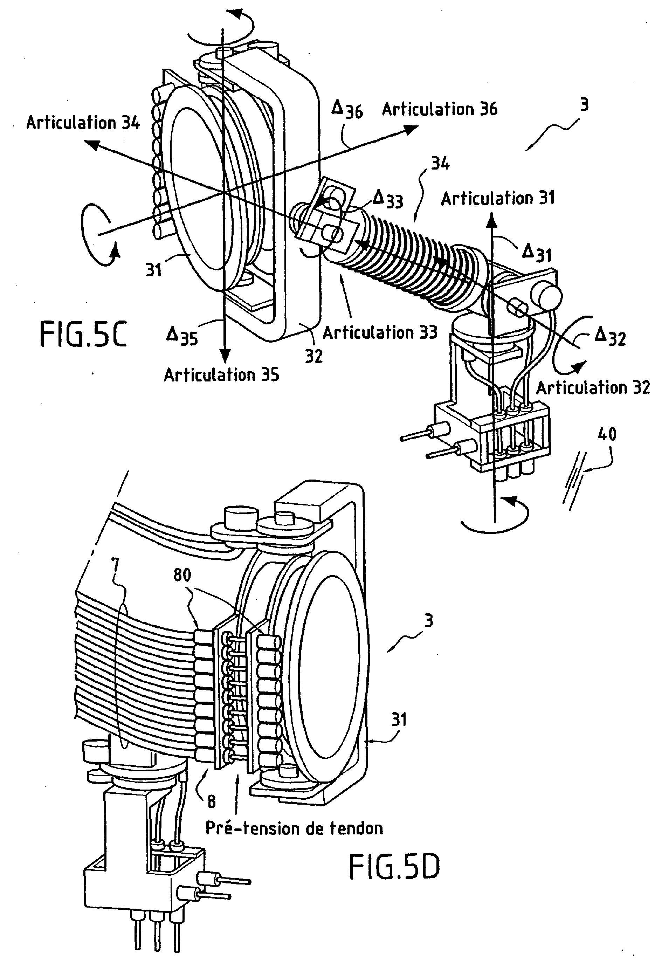

Ce sous-ensemble 3 inclut six axes d'articulation, cinq de type dit rotoïde et un de type dit prismatique. La figure 5C est une vue isométrique illustrant, en trois dimensions, les positions relatives de ces six axes, référencés Δ₃₁ à Δ₃₆, pour une posture particulière du coude *C* de l'opérateur *U*, à un instant donné. Les articulations correspondantes sont référencées "*articulation 31*" à "*articulation 36*".

Le sous-ensemble 3 est conçu pour effectuer les mêmes mouvements que ceux de l'épaule humaine *E*, bien que les cinq "DOF" de l'épaule humaine *E* soient simulés par un mécanisme à six "DOF".

Grâce à ces dispositions, le mouvement de l'exosquelette d'épaule 3 n'est limité, ni en amplitude ni en dextérité.

La base de l'exosquelette d'épaule 3 fournit la base complète du lien série de l'exosquelette de bras *EXB* et est assujettie à la plaque rigide de poitrine 40 qui est liée autour du thorax *TH* de l'opérateur *U* à l'aide des lanières 42. L'assujettissement est réalisé via une pièce de fixation 33, qui sert de lien parent pour la première articulation de l'exosquelette *EXB.*

L'extrémité distale du mécanisme 3 est située à la base de la partie supérieure du bras *BS* de l'opérateur *U*, où elle est fixée au moyen d'un coussin gonflable 30, lui-même entouré d'une pièce annulaire rigide 31.

A l'exception de la troisième articulation *"articulation* 33", d'axe Δ₃₃, qui est de type prismatique, toutes les autres articulations sont de type rotoïde. Les première et deuxième articulations, "*articulation* 31" et *"articulation* 32", d'axes respectifs Δ₃₁ et Δ₃₂, sont actives et actionnées par des tendons flexibles 731' et 732' respectivement, dans des gaines de guidage 731 et 732, faisant partie du faisceau de tendons 7.

Leur rotation est effectuée par la traction de tendons qui sont fixés par des poulies sur les axes des articulations correspondants, comme il le sera montré en regard de la description ci-après. Plus précisément, ces articulations sont actionnées chacune par une paire de tendons, ce qui permet des mouvements, soit dans le sens des aiguilles d'une montre, soit dans un sens contraire.

Pour une description plus détaillée du système, on va se référer aux figures. La première articulation *"articulation* 31" autour de l'axe Δ₃₁, qui est une articulation de rotation, est activée par une paire de deux tendons 731, qui appartiennent au "faisceau N° 2" précité. Cette articulation combine la pièce de fixation 33 avec le premier organe d'un lien "*lien* 31". Le lien "*lien* 31", qui est le lien fils de l'articulation "*articulation* 31" comprend une poulie 312 qui est fixée sur un arbre rotatif 313, lequel est connecté au-dessus de roulements à billes à la pièce de fixation 33. L'arbre 313 est également relié rigidement à une plaque circulaire 314, qui est vissée sous deux parois latérales 315 et 316. De par la fonction de l'articulation "*articulation* 31", tous les organes du premier lien "*lien* 31" peuvent tourner autour de la pièce de fixation 33, autour de l'axe Δ₃₁. La deuxième articulation *"articulation* 32", qui est une autre articulation de rotation autour de l'axe Δ₃₂ connecte le lien *"lien* 31" au lien fils de l'articulation "*articulation* 32 ", appelé "*lien* 32". Ce lien comporte un autre arbre 322 qui est fixe en rotation sur les parois latérales 315 et 316. La paire de tendons 732' traverse une unité 320 de pré-charge et est fixée à la poulie 323. Deux parois latérales, 324 et 325, sont vissées ensemble à une bride télescopique 326. L'arbre 322 est centré dans une zone médiane de ces parois latérales au moyen de roulements à billes permettant la rotation du lien "*lien* 32" en entier autour de l'arbre mécanique 322 et ainsi autour de l'axe commun Δ₃₂. La poulie 323 est fixée rigidement aux parois latérales et induit ainsi le mouvement du lien "*lien* 32" autour du lien "*lien* 31", quand les tendons 732', dans leurs gaines 732, tirent ou poussent.

L'articulation "articulation 33", de type prismatique et d'axe Δ₃₃, est munie d'un tube télescopique *F* (figure 6D) prolongé par un ressort de pré-tension *SP*.

Le ressort *SP* est du type dit à boudin. Un tendon 733' attaché au bout du tube, courant à travers lui, permet au tube télescope de se rétracter par contraction du ressort. Avant de traverser le télescope, le tendon traverse l'unité de pré-charge 320.

Un lien fixe de l'articulation télescopique "*articulation* 33" est constitué par un premier tube télescopique 332 et est combiné avec une bride 326. Un lien mobile, "*lien* 33", comporte un système de tubes télescopiques F et des extrémités distales d'une bride télescopique 333 qui sont assujettis à une pièce intermédiaire 335. Au moyen d'un ressort à compression 334, la bride télescopique distale 333 est pré-chargée contre la bride télescopique 326. Si le tendon 733' s'oppose à la force du ressort *SP,* il cause un mouvement de contraction des tubes télescopiques le long de l'axe commun Δ₃₃. L'articulation "*articulation* 34", qui est une articulation passive de type rotoïde, combine le lien "*lien* 33" avec le lien *"lien* 34". Au moyen de l'articulation *"articulation* 34 ", le lien "*lien* 34 " peut tourner autour de l'axe Δ₃₄.

Le lien "*lien* 34" comporte un arbre 341 qui est connecté au moyen de roulements à billes radiaux à une pièce intermédiaire 335, permettant la rotation autour de l'axe Δ₃₄. L'axe Δ₃₄. est vissé sur une pièce 342 en forme de "U", qui porte aux deux extrémités distales deux plaques supplémentaires, 343 et 345. Ces plaques enferment des roulements à billes de rotation autour de l'axe Δ₃₅, ainsi que des plaques supérieures, 344 et 346 respectivement.

La cinquième articulation, "*articulation* 35 ", qui est également une articulation de rotation passive, le lien "*lien* 34" avec le lien "*lien* 35" permettant la rotation autour de l'axe Δ₃₅. Le lien comporte deux pièces colinéaires aux axes des arbres 351 et 354, qui sont fixées sur un anneau externe 353 au moyen de brides de fixation.

Ainsi, la bride de fixation 352 fixe l'arbre 351 sur l'anneau externe 353, et la bride de fixation 355 fixe l'arbre 354 sur le fond de l'anneau 353, respectivement. Les deux arbres traversent les roulements à billes, qui sont maintenus entre la plaque 343 et la plaque supérieure 344, et la plaque 345 et la plaque supérieure 346, respectivement.

L'articulation "*articulation* 36", d'axe Δ₃₆, est active et est utilisée pour imposer une rotation de la partie supérieure de bras *BS.*

Une paire de tendons 736', qui provient du dos de l'opérateur *U*, traverse l'anneau externe 353 sans le toucher et est attachée à un anneau interne 362, qui a la fonction d'une poulie creuse. Cet anneau interne 362, qui est un organe du lien "*lien* 36" est attaché à un autre anneau circulaire 31, qui porte des coussins gonflables 30. L'anneau circulaire 31 est relié à l'anneau externe 353 au moyen de roulements à billes de faible section, permettant la rotation autour de l'axe Δ₃₆. L'anneau bride 363 est vissé sur l'anneau 31 et un autre organe du lien *"lien* 36". Ainsi, l'articulation "*articulation* 36", qui peut être enclenchée par les tendons 736', permet un mouvement radial du lien *"lien* 36" à l'intérieur de l'anneau externe 353 et, ainsi, à l'intérieur du lien *"lien* 35", autour du sixième axe d'articulation Δ₃₆.

Les trois articulations *"articulation* 34" à *"articulation* 36" ont leurs axes, Δ₃₄ à Δ₃₆, qui se coupent en un point unique qui leur permet d'agir en tant qu'articulation commune sphérique simple à l'extrémité distale du sous-ensemble 3.

La figure 5D est une vue isométrique, en vue arrière, illustrant, en trois dimensions, le système de pré-charge 8 avec ses organes 80 de pré-tension des tendons du faisceau 7.

Par le biais de ce système, les tendons, qui sont guidés à l'intérieur des gaines, peuvent être pré-tendus en mettant la gaine extérieure sous compression.

La figure 6C décrit de façon plus détaillée la configuration générale d'une telle unité de pré-charge 8.

Chaque unité de pré-charge dans la conception de l'exosquelette *EXB* comporte des dispositifs semblables.

Une description générale des composants impliqués et de leur fonction va maintenant être fournie. Une armature rigide, qui établit une référence fixe, ci-après appelée *CR,* est utilisée pour fixer des vis *C*₁ de pré-charge des tendons. Les vis *C*₁ sont creuses et laissent les traverser les tendons, qui sont arbitrairement référencés 700'. La gaine 700, qui guide les tendons 700', est intersectée au point où est placée l'unité de pré-charge et les extrémités d'intersection 700a des gaines finissent sur la surface externe des vis de pré-charge *C*₁. Comme les extrémités distales des gaines sont arrêtées à des points près de l'unité d'activation en 700*b*I (en butée contre la plaque d'arrêt *BA*) et près de l'unité de motorisation, en 700*b*II, la gaine 700 est comprimée dès que les vis de pré-charge *C*₁ sont tournées dans le sens des aiguilles d'une montre. Cette compression accrue dans les gaines spirales 700 qui entourent les tendons 700' les tend. Ces tendons sont enfilés dans les gaines, ce qui entraîne une pré-charge des tendons.

Les cinq "DOF" du bras humain et des six "DOF" du sous-ensemble d'exosquelette d'épaule 3 forment une boucle cinématique fermée dont les propriétés sont les suivantes :
- la gamme complète de mouvements de l'épaule humaine *E* peut être réalisée ; et
- toutes les articulations humaines (même les scapulo-claviculaires) peuvent être détectées et actionnées.

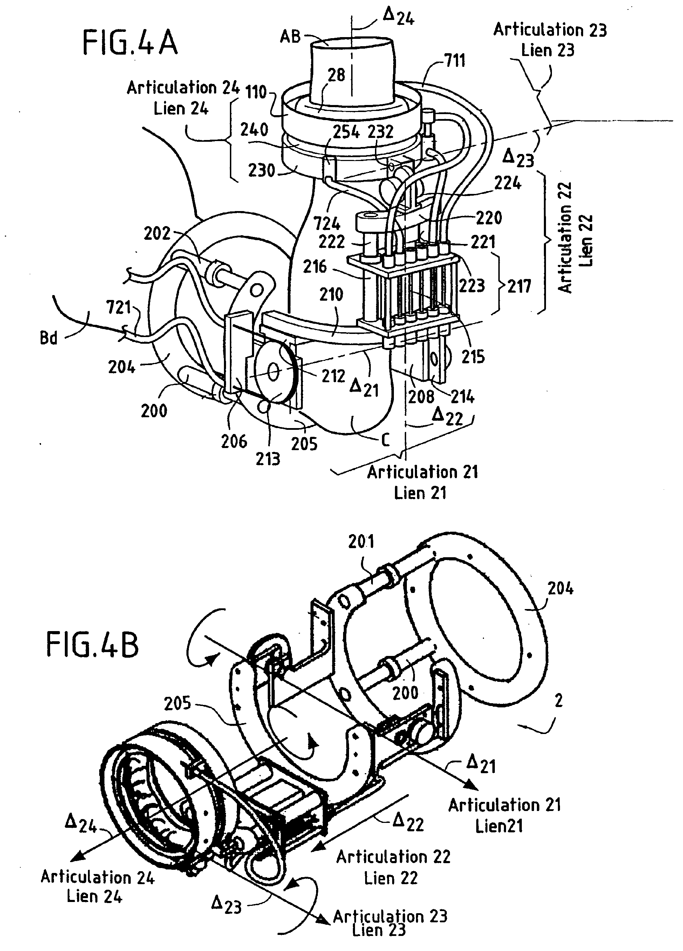

On va maintenant décrire de façon plus détaillée le sous-ensemble de base 2, par référence aux figures 4A à 4D3.

La figure 4A illustre plus précisément, en vue arrière, le sous-ensemble de coude 2. Celui-ci comporte quatre axes d'articulation.

La figure 4B est une vue isométrique illustrant, en trois dimensions, les positions relatives de ces quatre axes, Δ₂₁ à Δ₂₄, pour une posture particulière du coude *C* de l'opérateur *U*, à un instant donné. Les articulations correspondantes sont référencées "*articulation* 21" à *"articulation* 24".

Sur la partie gauche de la figure 4A, on a représenté deux tubes télescopiques jumeaux, 200 et 202 respectivement, réglables en longueur, qui fournissent le moyen d'adapter la longueur de l'exosquelette au bras supérieur humain *BS*. La longueur peut être ajustée en bloquant deux organes à vis, 201 et 203 respectivement, un pour chaque tube, 200 et 202. Aucun autre ajustement n'est nécessaire.

Les premières extrémités des tubes télescopiques, 200 et 202, sont assujetties à une pièce annulaire 204, entourant le bras supérieur *BS*, c'est-à-dire au-dessus du coude. Lorsque l'exosquelette *EXB* est assemblé, cette pièce annulaire est assujettie rigidement à l'anneau 363 du sous-ensemble d'épaule 3. Les secondes extrémités sont assujetties à une pièce 205, en forme de fer à cheval, entourant également le bras supérieur *BS.*

Ces deux anneaux, qui sont assemblés au moyen de tubes télescopiques, constituent une partie de l'unité d'ajustement. Deux pièces supplémentaires sont reliées à cette unité : deux plaques d'articulation de base pour l'articulation "*articulation* 21". La plaque de base latérale 206 est rigidement montée sur l'anneau 205 et porte les arbres 207 qui établissent une partie de l'articulation commune "*articulation* 21". La plaque de base médiane 208 est également reliée à l'anneau 205 sur son côté proximal, et porte un autre arbre 209, qui, avec l'arbre 207, constituent les moyens mécaniques pour la rotation autour de l'axe Δ₂₁ de l'articulation "*articulation* 21". L'unité d'ajustement l'articulation construit le lien parent pour l'articulation "*articulation* 21". Le lien enfant de cette articulation, le lien "*lien* 21", comporte un autre anneau 210, ayant la forme d'un fer à cheval. La plaque latérale 212 est assujettie sur son côté distal au côté proximal de l'anneau 210. Sur son côté proximal, la plaque latérale 212 est montée sur l'arbre 207 au moyen de roulements à billes qui permettent un mouvement radial. En outre, une poulie 213 est fixée à la plaque latérale 212, pour la mise en action du lien "lien 21" autour de l'articulation "*articulation* 21" d'axe Δ₂₁. Les tendons 721, qui proviennent du faisceau de câbles 7 traversent la plaque de base latérale 206 et sont fixés sur la poulie 213. Ainsi, par la mise en action de ces tendons, on peut influencer ou induire des mouvements du coude C de l'opérateur *U*. La plaque médiane 214 est également fixée sur le côté proximal de l'anneau 210. Le côté proximal de la plaque médiane 214 est monté au moyen de roulements à billes sur l'axe 209, qui est colinéaire à l'axe 207, permettant au lien *"lien* 21" de tourner autour de l'axe Δ₂₁. Deux tubes creux 215 et 216 sont attachés du côté distal de l'anneau 210. Ces tubes servent de lien parent à l'articulation prismatique commune "*articulation* 22".

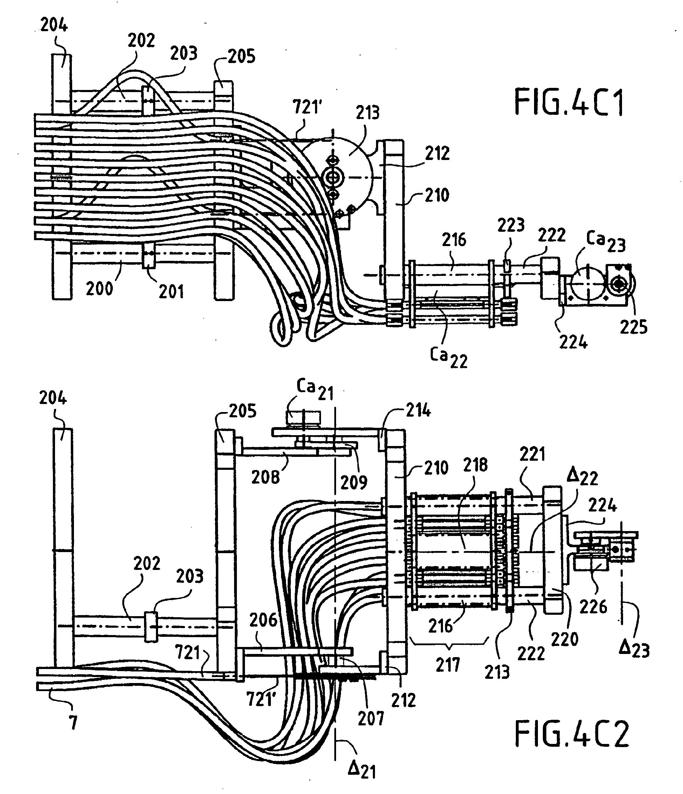

L'unité de pré-charge de l'avant-bras 217 est fixée à ces tubes creux 215 et 216 au moyen de vis. Sur la figure 4A, les tendons qui traversent l'unité de pré-charge ne sont pas représentés. Sur les figures 4C1 et 4C2, on a représenté les tendons du faisceau de câbles 7 entrant dans l'unité de pré-charge, les tendons sortants n'étant pas représentés. Le lien *"lien* 21" et le lien "*lien* 22" forment l'articulation *"articulation* 22" qui une articulation passive et prismatique. Le lien *"lien* 22" comporte deux tiges massives 221 et 222, qui sont colinéaires et concentriques aux tubes creux, 215 et 216, de façon à s'adapter exactement à l'enceinte interne des tubes creux, et, ainsi, à former un système télescopique de tubes. Les tiges massives, 221 et 222, sont mobiles à l'intérieur des tubes creux 215 et 216. Du côté distal, les deux tubes, 221 et 222, sont attachés à une pièce 220, qui est un tronçon d'anneau. Cette pièce 220, de son côté proximal, relie les deux tiges massives et, de son côté distal, est attachée à une pièce 224, en forme de "T", qui porte un petit arbre 225. Au moyen des tubes télescopiques, le lien *"lien* 22" peut se déplacer linéairement le long de l'axe Δ₂₂, par rapport au lien *"lien* 21".

L'unité de pré-charge porte un capteur linéaire 218, dont la partie mobile est fixée à une plaque 223. Cette plaque est fixée sur les tubes massifs, 221 et 222, au moyen de vis. Ainsi, lorsque le lien "*lien* 22" est en mouvement le long de l'axe commun Δ₂₂, la pièce mobile du capteur linéaire se déplace en même temps que la plaque 223.

Le lien "*lien* 22", qui est un lien mobile dans l'articulation *"articulation* 22", est en même temps le lien parent pour l'articulation *"articulation* 23 ".

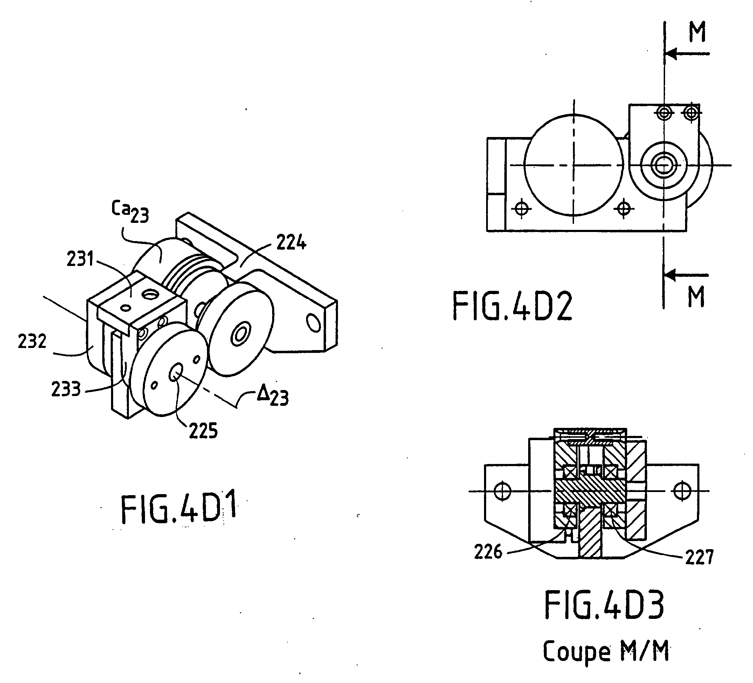

Les figures 4D1 et 4D3 décrivent les organes de l'articulation "*articulation* 23" de façon plus détaillée, respectivement dans l'espace, et en coupe "MM" de la figure 4D2. La pièce 224, en forme de "T", porte un arbre fixe 225, sur lequel sont montés deux roulements à billes, 226 et 227 ; sur les parties latérales 226 et médiane 227, respectivement, de la pièce 224 en forme de "T".

Le lien mobile sur l'articulation *"articulation* 23" est le lien *"lien* 23" qui peut accomplir une rotation passive autour de l'axe Δ₂₃ de l'articulation "*articulation* 23". Ce lien comporte un anneau métallique externe 230, qui est relié à une pièce bride 231 sur son fond. Cette pièce bride 231 est vissée entre deux plaques de côté, une médiane 232 et une latérale 233, respectivement. Ces plaques de côté, 233 et 232, sont reliées sur l'extérieur des roulements à billes, 227 et 226, respectivement, permettant ainsi la rotation autour de l'arbre 225.

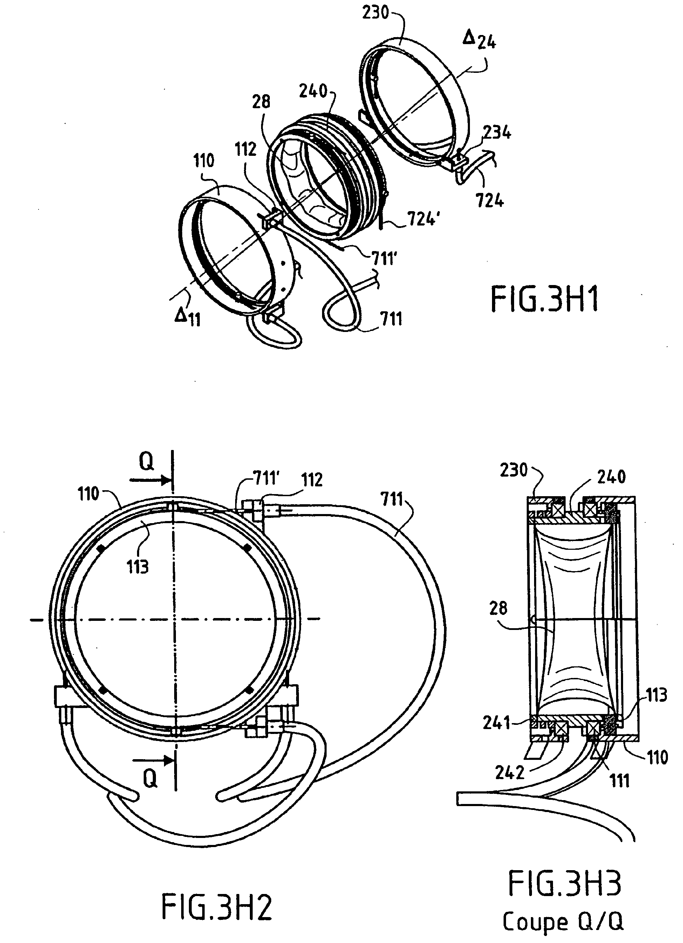

Le lien enfant, "*lien* 24, de l'articulation "*articulation* 24", qui est une partie mobile, comporte un anneau rigide 240, qui enferme un coussin gonflable 28, et une poulie creuse 241, qui est attachée au côté proximal de l'anneau rigide 240. Les tendons 724' qui sont guidés le long des gaines 724, traversent l'anneau externe 230 et sont fixés à la poulie creuse 241 (comme le montre les figures 3H1 à 3H3). L'anneau rigide 240 est centré à l'intérieur de l'anneau externe 230, au moyen d'un roulement à billes 242 de faible section, qui permet la rotation de l'anneau 240 autour de l'axe Δ₂₄ à l'intérieur de l'anneau externe 230. Cette rotation est induite par le mouvement relatif des tendons 724'. Ces tendons 724' sont assujettis à la poulie 241 et aux gaines 724 qui sont mécaniquement verrouillées en dehors de l'anneau externe 230, ce au moyen de pièces d'arrêt 234. Ainsi, par l'intermédiaire des tendons 724', le lien "*lien* 24" peut être déplacé autour de l'axe Δ₂₄ de l'articulation "*articulation* 24", entraînant une pronation ou une supination de l'avant-bras *AB* de l'opérateur *U*.

La nécessité d'une cinématique apparemment complexe, comparée à la simplicité également apparente de l'articulation de coude, est justifiée ci-après.

En effet, on ne peut pas considérer l'articulation humaine de coude *C* comme une charnière pure, dans le sens où la position de son axe oscille pendant les mouvements. Par conséquent, l'utilisation dans un exosquelette d'un simple "1 DOF" commun, pour imiter la flexion de coude ne peut pas conduire à des résultats précis et cause des frottements dans le mécanisme, car les deux axes de rotation ne coïncident jamais.

Il est par conséquent nécessaire d'ajouter les deux articulations passives additionnelles précitées, "*articulation* 22" et "*articulation* 23", d'axes respectifs Δ₂₂ et Δ₂₃, équipées de capteurs d'angle (par exemple le capteur linéaire 218 pour l'axe Δ₂₂ et le capteur d'angle 226 pour l'axe Δ₂₃, sur les figures 4C1 et 4C2 ).

Le mécanisme combiné permet alors des résultats précis pour la flexion du coude *C*, même si le système est assujetti de manière très inexacte.

Dans son ensemble, le système établit une structure cinématique de référence au-dessus du coude humain *C*, à partir de la partie supérieure du bras *BS* et de la fin de l'avant-bras *AB.* Les mouvements humains de coude *C* (flexion/extension et pronation/supination) peuvent être détectés et influencés sans limiter la gamme naturelle de mouvements. Pour fournir un couple de rétroaction normal à la flexion humaine et à la rotation de coude, deux déclencheurs seulement sont nécessaires, bien que quatre axes mobiles fournissent un mouvement sans entrave du bras humain pendant les télécommandes.

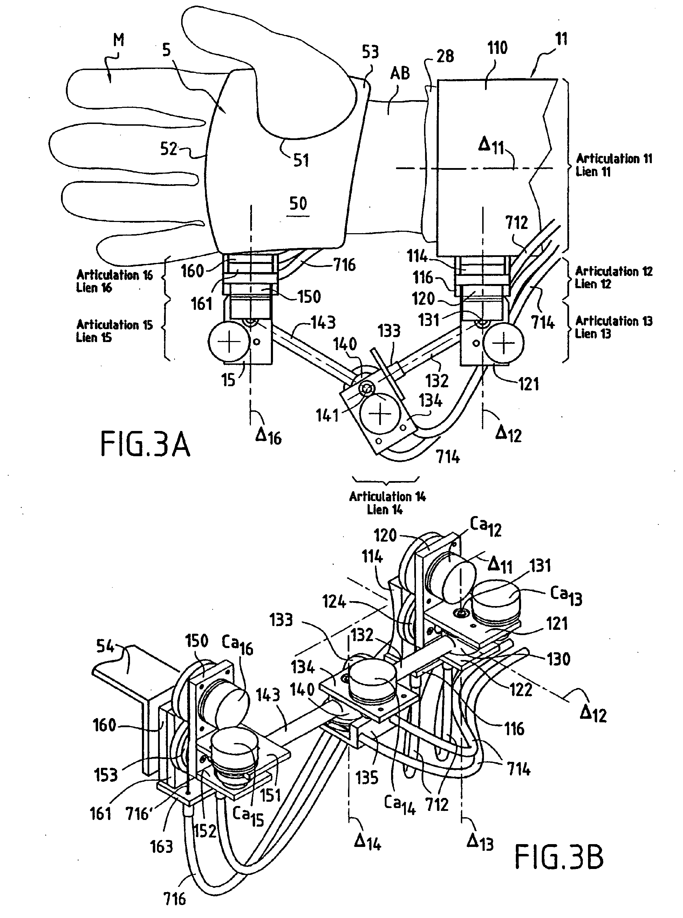

On va maintenant décrire de façon plus détaillée le sous-ensemble de poignet 1 par référence aux figures 3A à 3H3.

La figure 3A illustre, en vue de face, le sous-ensemble de poignet 1. Celui-ci comporte six axes d'articulation, tous de type rotoïde.

La figure 3B est une vue isométrique illustrant, en trois dimensions, les positions relatives de ces six axes, Δ₁₁ à Δ₁₆, pour une posture particulière de la main *M* et du poignet *P* de l'opérateur *U*, à un instant donné.

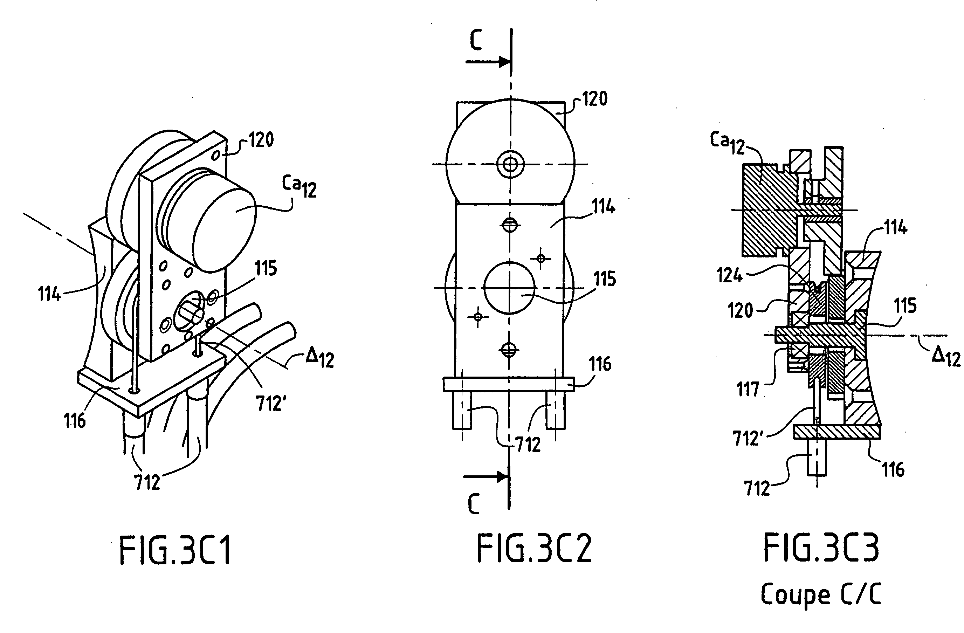

Les figures 3A et 3B sont utilisées comme référence pour expliquer le fonctionnement de la première articulation du sous-ensemble de poignet 1. Les figures 3C1 à 3G3 illustrent en outre des vues du mécanisme dé-assemblé. Les articulations correspondantes sont référencées "*articulation* 11" à "*articulation* 16".

L'extrémité proximale du sous-ensemble 1 est enfilée sur l'avant-bras AB et fixée sur celui-ci par un coussin gonflable 28 entouré d'une pièce annulaire rigide 240, enfilé sur l'avant bras, près de la main. Cette pièce annulaire rigide 240 est reliée sur son extérieur à la partie intérieure d'un anneau externe 110, au moyen d'un roulement à billes 111 de section mince, comme le montrent plus particulièrement les figures 3H1 à 3H3. Par l'intermédiaire de ce roulement à billes 111, l'anneau externe 110 peut tourner autour de l'axe Δ₁₁, qui est l'axe de rotation de l'articulation *"articulation* 11". Sur la figure 3A, on aperçoit seulement l'anneau externe 110 et le coussin gonflé 28.

Le lien "*lien* 11", qui est le lien enfant dans l'articulation "articulation 11", comporte l'anneau externe 110 et des pièces d'arrêt 112, qui sont vissées sur l'anneau 110 pour constituer un moyen de verrouillage des gaines 711 à leur extrémité distale. Les tendons 711' sont enfilés au travers de ces pièces d'arrêt 112 et de trous dans l'anneau externe 110, à l'extrémité à d'une poulie creuse 113, qui est attachée à l'anneau fixe 240. Ainsi, en créant un mouvement relatif entre les tendons 711' et les gaines 711, l'anneau externe 110 et, en conséquence, le lien "*lien* 11" dans sa totalité sont animés de mouvements autour de l'axe Δ₁₁ de l'articulation "*articulation* 11", comme le montre plus particulièrement la vue éclatée des articulations "*articulation* 11" et "*articulation* 24" des figures 3H1 à 3H3. Sur la figure 3A, les gaines ne sont pas représentées.

Un organe supplémentaire du lien "*lien* 11" est une bride de fixation 114 qui est utilisée pour fixer un arbre mécanique 115 orthogonal à l'anneau externe 110. En outre, une plaque d'arrêt 116 est fixée sous la bride de fixation 114 pour arrêter les gaines spiralées 712 à leur extrémité distale. L'articulation *"articulation* 12" entraîne le mouvement du lien "*lien* 12" autour du lien "*lien* 11", le long de l'axe de rotation d'articulation Δ₁₂.

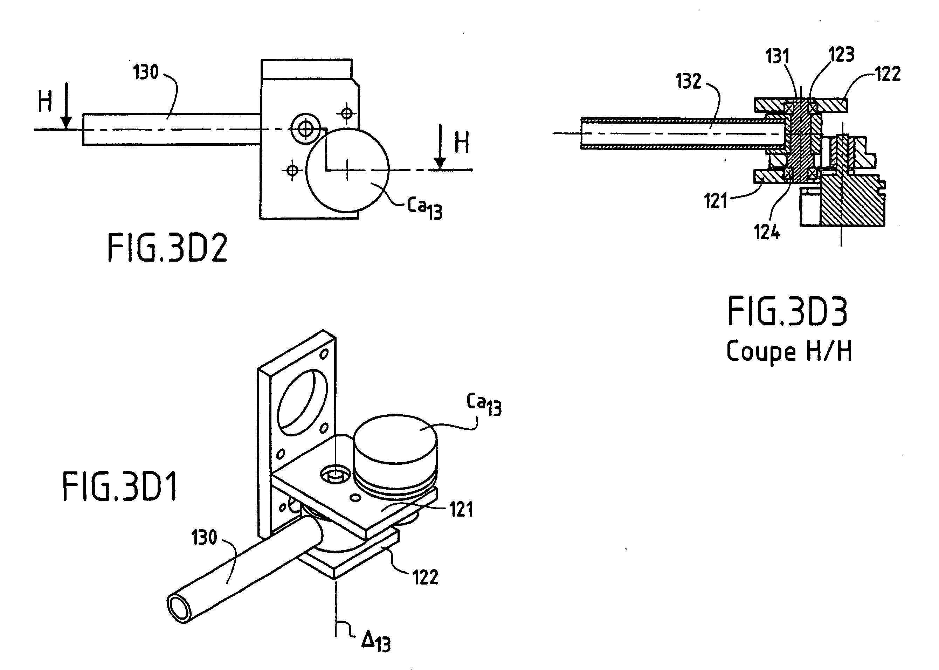

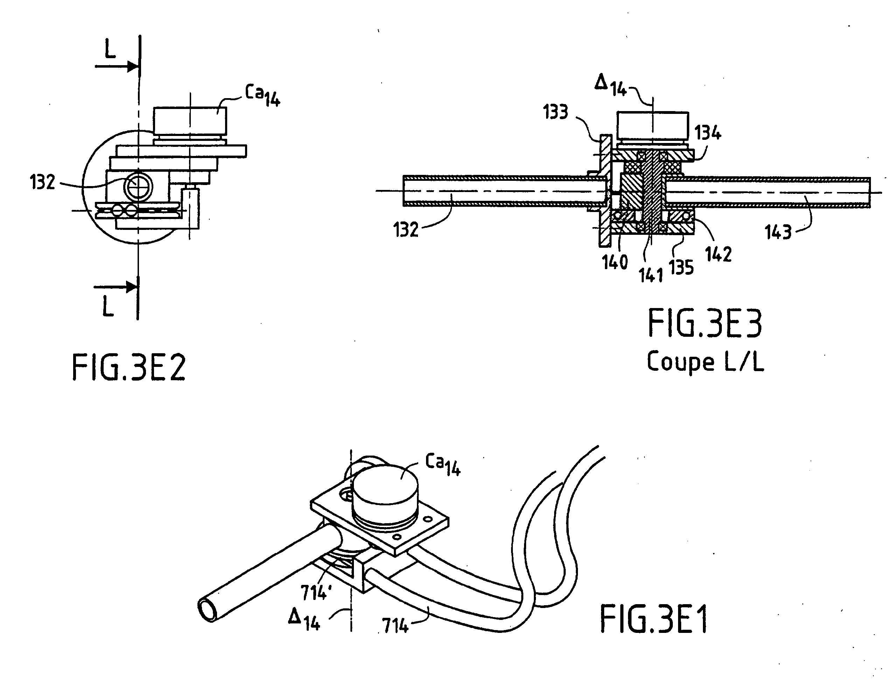

La vue en coupe de l'articulation *"articulation* 12 " sur la figure 3C3 peut être utilisée pour décrire l'articulation de façon plus détaillée. L'arbre 115 porte un roulement à billes 117 à son extrémité distale, sur laquelle est fixée une plaque de base 120 sur la surface externe de roulement. Cette plaque de base 120 constitue une référence pour le lien "*lien* 12", auquel toutes les autres parties de ce lien sont assujetties. Ainsi, la poulie 124 est vissée sur la plaque de base 120, assujettissant les tendons 712' au lien "*lien* 12". Les tendons 712' sont enfilés dans la pièce d'arrêt 116 du lien précédent et créent une rotation dans le lien "lien *12*" dès qu'un mouvement relatif entre les tendons 712' et les gaines 712 est induit par la mise en action des tendons par des moteurs. En outre, deux plaques horizontales, 121 et 122 respectivement, sont fixées à la plaque de base 120, au moyen de vis, comme illustré plus particulièrement par les figures 3D1 à 3D3. Ces plaques portent toutes deux des roulements à billes, 124 et 123 respectivement, entre lesquels est maintenu l'arbre mécanique 131 de l'articulation "*articulation* 13". L'articulation "*articulation* 13" relie le lien "*lien* 12" en tant que lien parent au lien enfant "lien 13", qui tourne passivement autour de l'axe Δ₁₃. La base du lien *"lien* 13" est l'arbre 131, auquel une pièce cylindrique 130 est fixée. Cette pièce cylindrique 130 comporte un foret, orthogonal à la surface cylindrique, ce qui fournit le moyen de fixer un faisceau cylindrique 132 à son extrémité proximale. Du fait de la rotation de l'axe 131, le lien entier *"lien* 13" tourne autour de l'axe Δ₁₃ de l'articulation *"articulation* 13". Le côté distal du faisceau cylindrique 132 est fixé à une plaque bride 133, qui porte deux plaques horizontales, une supérieure 134 et une inférieure 135, respectivement, comme le montrent plus particulièrement les figures 3E1 à 3E3. La plaque inférieure 135 fournit un moyen d'arrêt des gaines 714 à leurs extrémités distales. De façon similaire aux plaques, 121 et 122, les plaques 134 et 135 portent des roulements à billes qui maintiennent et centrent l'arbre mécanique 141 entre les plaques 134 et 135.

L'articulation "*articulation* 14", qui est une articulation active, entraîne la rotation du lien "*lien* 14" autour du lien "*lien* 13", le long de l'axe Δ₁₄. Le lien "*lien* 14" comporte une autre partie cylindrique 140, qui est fixe sur l'axe 141, et a un foret orthogonal à la surface cylindrique, qui fixe le côté proximal d'un deuxième faisceau cylindrique 143. Une poulie 142 est en outre fixée sur la partie cylindrique 140, pour assujettir les tendons 714'. En créant un mouvement relatif entre les tendons 714' et les gaines 714, un mouvement de l'arbre 141 est induit autour de l'axe Δ₁₄ de l'articulation *"articulation* 14". Ce mouvement d'arbre entraîne le mouvement de lien "*lien* 14", dans sa totalité, autour du lien "*lien* 13".

L'extrémité distale du faisceau cylindrique 143 est tenue dans une autre partie cylindrique 144, qui est attachée à un arbre 145.

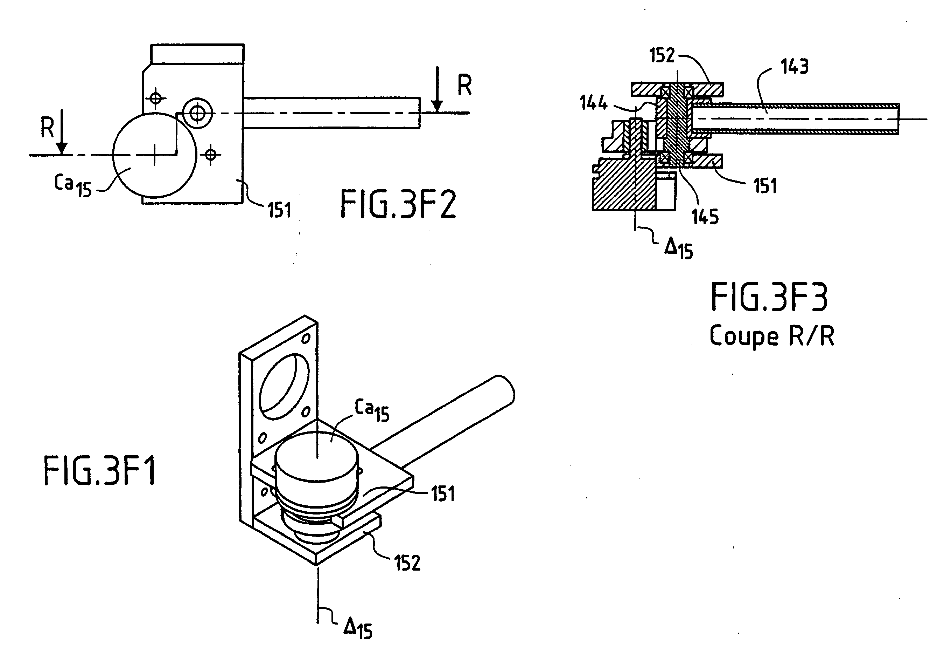

Cet arbre 145 constitue l'axe mécanique de l'articulation passive "*articulation* 15" qui relie le lien "*lien* 14" au "*lien* 15", dans laquelle le lien "*lien 15"* tourne en tant que lien enfant autour du lien *"lien* 14" le long de l'axe Δ₁₅, comme le montrent plus particulièrement les figures 3F1 à 3F3, et 3B. L'arbre 145 est maintenu entre deux roulements à billes, qui sont tenus par deux plaques horizontales, une supérieure 151 et une inférieure 152, respectivement, ces plaques étant vissées sur la plaque de base 150 du lien "*lien* 15".

L'extrémité distale est fixée sur un gant de plastique dur 5, enfilé sur la main *M* de l'opérateur *U*. Dans l'exemple illustré, le gant 5 est constitué d'une enveloppe principale 50 comportant un premier orifice 51 (supérieur sur la figure 3A) permettant la sortie du pouce et un ou plusieurs orifices 52 (axiaux) autorisant une sortie libre des autres doigts de la main *M*.

Le sous-ensemble 1 est fixé à l'enveloppe 50 du gant 5 par tout moyen approprié (vis, etc.), via une pièce distale 54 associés à l'axe d'articulation "*articulation* 16", d'axe Δ₁₆.

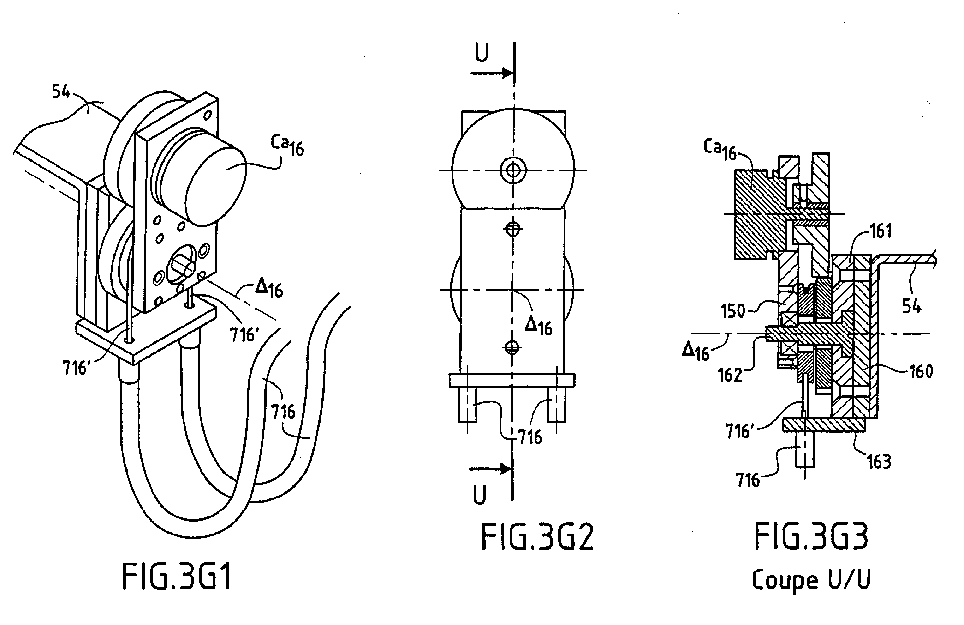

L'articulation "*articulation* 16" combine le lien "*lien* 15" avec la pièce distale 54, autorisant une rotation active, influencée par des tendons, autour de l'axe Δ₁₆. La pièce distale 54 est fixée sur l'arrière du gant 5, dans lequel est insérée la main *M* de l'opérateur *U*. L'autre côté de cette pièce distale 54 est relié à une plaque de base 160, comme le montrent plus particulièrement les figures 3G1 à 3G3.

Cette plaque de base 160 est maintenue à une deuxième plaque 161 pour fixer un arbre 162 orthogonal à la surface des pièces. Cet arbre 162 porte un roulement à billes sur son côté distal, sur lequel est attachée la plaque de base 150 du "*lien* 15". Une poulie 153, qui est directement montée sur la plaque de base 150 fixe les tendons 716', qui proviennent des gaines 716. Comme les gaines 716 sont fixées à leurs extrémités distales à une plaque arrêt 163, qui est attachée à la plaque de base du lien *"lien* 16", n'importe quel mouvement relatif des tendons 716' à l'encontre des gaines 716 induit une rotation du *"lien* 16" autour de l'axe Δ₁₆, relativement au lien *"lien* 15".

En résumé, la mobilité du sous-ensemble de poignée peut être détaillée comme suit :

Les trois articulations "*articulation* 13" à "*articulation* 15", d'axes Δ₁₃ à Δ₁₅, sont des articulations d'un type dit au rotoïde. Les articulations "*articulation* 13" et "*articulation* 15", d'axes Δ₁₃ et Δ₁₅ sont purement passives, l'articulation "*articulation* 14", d'axe Δ₁₄, est active et commandée par une des paires de tendons flexibles du faisceau 7, référencée 714'. Les articulations passives ont été intégrées au sous-ensemble 1 pour fournir un mouvement sans entrave du poignet humain *P* pendant les opérations de télécommande du robot (non représenté).

Avec la structure de squelette humaine et les attaches sur le corps humain de l'opérateur *U* sur deux côtés, ce mécanisme forme un pantographe. L'abduction ou l'adduction de poignet *P* peut être commandée par la mise en action de l'articulation *"articulation* 14", d'axe Δ₁₄, et des mouvements résultants dans les articulations passives. Si les tendons 714' actionnent l'articulation "*articulation* 14" vers des angles d'articulation faibles, une abduction de l'articulation de poignet P est imposée. Dès que les tendons 714' commandent l'articulation "*articulation* 14" vers des angles d'articulation élevés, une adduction de l'articulation de poignet P est imposée.

Pour comprendre comment un couple est exercé pour exécuter une flexion de poignet P, on va se reporter à la vue isométrique représentée sur la figure 3B.

Les articulations, *"articulation* 12" et *"articulation* 16", d'axes Δ₁₂ et Δ₁₆, sont toutes deux de type active. Elles sont utilisées pour détecter et imposer le mouvement de flexion au poignet *P*. Si, par exemple, les deux articulations tournent dans le sens des aiguilles d'une montre, les liens d'articulations d'exosquelette commandent une flexion du poignet humain *P* vers le haut et, réciproquement, une commande dans le sens contraire des aiguilles d'une montre, impose une flexion vers le bas. Si les deux articulations sont bloquées, aucune flexion de poignet ne peut se produire.

Pour obtenir ces mouvements, les deux articulations, *"articulation* 12" et "*articulation* 16", sont commandées également par des paires de tendons flexibles 712' et 716', respectivement.

Comme le poignet humain P est une articulation ellipsoïde et non une articulation sphérique, ces seuls cinq liens ne peuvent pas fournir un comportement optimal du mécanisme pendant la circumduction ou aucun autre mouvement combiné. Par conséquent, l'articulation "*articulation* 11" a été introduite dans la chaîne cinématique. Cette articulation "*articulation* 11", d'axe Δ₁₁, est encore une articulation de type rotoïde active qui peut compenser l'excentricité de n'importe quel mouvement combiné. Elle est commandée par une paire de tendons flexibles 711'.

De façon avantageuse, toutes les articulations de ce sous-ensemble 1 sont associées à des capteurs, *Ca*₁₂ à *Ca*₁₆ (figure 3B) qui mesurent les angles de rotation autour des axes correspondants, Δ₁₁ à Δ₁₆. Les données, résultats de ces mesures, sont transmises, par tout moyen approprié, à des systèmes de réception localisés par exemple dans la station spatiale, voire directement dans le boîtier 6 (figure 1B). Il peut s'agir de transmissions filaires ou au contraire sans fil (radio-transmission, etc.). Ces aspects, en soi, sont bien connus de l'homme de métier et il n'est pas nécessaire de les détailler plus avant.

Il résulte de ces dispositions que le sous-ensemble 1 autorise des mouvements libres du poignet *P*, sans limiter en aucune façon le degré de mobilité de l'opérateur *U*.

On va maintenant décrire de façon plus détaillée le fonctionnement de l'unité de commande des articulations actives.

Comme il a été indiqué, selon l'une des caractéristiques importantes de l'invention, les couples d'entraînement d'articulations actives sont transmis à distance en utilisant des câbles tendons 7', guidés le long de la structure d'exosquelette *EXB,* provenant de moteurs *Mt* disposés sur une plaque arrière de poitrine 42, et transmis à chaque articulation activée. Le montage des moteurs sur le derrière de l'utilisateur *U* permet de réduire au minimum la taille et le poids du bras maître d'exosquelette *EXB.*

Dans un mode de réalisation pratique, on utilise avantageusement, en ce qui concerne les tendons du faisceau 7', des câbles multibrins, typiquement 7x19 et de diamètre 1 mm. Ce choix permet de réduire au minimum le frottement de courbure et autorise des charges allant jusqu'à 50 Nm. Pour transférer efficacement des couples en utilisant une transmission tendons à câbles, les câbles doivent être soumis à des forces de manière à être pré-tendus à la moitié de leur charge de fonctionnement, soit 25 Nm dans l'exemple décrit.

Les figures 6A, 6B et 6C illustrent schématiquement comment une paire de tendons à câbles, arbitrairement référencée 700', actionne une des articulations active, d'axe arbitrairement référencé Δ.

Une poulie, arbitrairement référencée *R,* coaxiale à l'axe Δ, est entraînée en rotation autour de cet axe par une boucle formée par la paire de tendons 700'. L'axe de la poulie R est solidaire d'une première pièce supposée fixe, arbitrairement référencée *A*₁. Une seconde pièce, supposée mobile, arbitrairement référencée *A*₂, est entraînée en rotation autour de l'axe Δ par la poulie *R.*

Sur la figure 6A, les deux pièces *A*₁ et *A*₂, sont représentées dans le prolongement l'une de l'autre : état référencé I. Si on imprime un couple à la poulie *R* (dans les sens inverse des aiguilles d'une montre dans l'exemple : flèche *f*), via la paire de tendons 700', celle-ci va être mise en rotation autour de l'axe Δ et la pièce *A*₂ va suivre ce mouvement de rotation : état référencé II (figure 6B). La pièce mobile, désormais référencée *A*'₂, est en position orthogonale à la pièce *A*₁.

Naturellement, un couple en sens inverse (sens des aiguilles d'une montre) remettrait la pièce mobile dans son premier état *A*₂ (figure 6A).

Les tendons 700' sont guidés sur l'exosquelette *EXB* (figure 1A) par des gaines dans lesquelles ils coulissent, référencées arbitrairement 700. La longueur de guidage peut être modifiée en fonction de la longueur de tendon 700'.

La figure 6C décrit de manière plus détaillée les unités mécaniques inclues le long du chemin d'un tendon, à partir d'un moteur et se terminant à une articulation activée. La figure 6C décrit le cas général de l'activation des articulations de rotation.

Les tendons 700', qui sont fixés sur les poulies *R*, comme décrit ci-dessus, sont guidés le long des gaines spiralées 700 jusqu'à ce qu'ils atteignent une unité de pré-charge, qui est utilisée pour étirer les tendons 700 ' par le biais des gaines et créer une pré-charge. Ceci peut être réalisé en raccourcissant la longueur des tendons par rapport aux gaines en faisant tourner les vis de pré-charge *C*₁ dans le sens contraire des aiguilles d'une montre. Ce système de pré-tension présente l'avantage que l'unité d'activation n'a pas à être fixée à la même structure de référence que l'unité de pré-charge, et peut être ainsi déplacée dans l'espace par rapport à l'unité de pré-charge, sans perte de tension ou modification involontaire de position de l'axe ayant tourné.

Passant au travers de l'unité de pré-charge, les tendons 700' sont guidés par une gaine 700 menant à une unité de motorisation (moteur *Mt*). L'unité de motorisation *Mt* comporte une poulie *ME* qui est assujettie à l'axe Δₘ du moteur *Mt*, soit directement ou via un organe à changement de vitesse. Le moteur *Mt* lui-même est fixé sur une pièce de référence *D* qui est également utilisée pour arrêter l'extrémité proximale 700*b*II des gaines. Les tendons 700' passent au travers de cette pièce de référence *D* pour s'enrouler sur une poulie *ME*, où ils sont fixés.

Ainsi, pour la mise action de l'unité d'activation, le moteur *Mt* doit entraîner la poulie *ME* dans la même direction que le mouvement désiré pour l'articulation activée.

On doit bien comprendre que l'organe de commande d'articulation qui vient d'être décrit se retrouve au niveau de toutes les articulations actives qui ont été décrites précédemment.

Un cas spécial d'activation linéaire est explicité par référence à la figure 6D qui décrit schématiquement l'activation linéaire de l'articulation commune prismatique "*articulation* 33".

La fonction de l'unité de pré-charge initiale est identique à la fonction décrite ci-dessus en regard de la figure 6C. La différence principale réside dans l'unité d'activation. L'articulation linéaire est actionnée par un seul tendon 700', qui est enfilé au centre des tubes télescopiques *F*. Ces tubes *F* sont assujettis sur le côté distal à une plaque d'arrêt *H*, où l'extrémité distale du tendon 700' est fixée. Du côté proximal des tubes télescopiques *F*, on prévoit une autre plaque d'arrêt *G* qui empêche l'extrémité distale de la gaine 700 de passer à l'intérieur des tubes télescopiques *F*. Le tendon 700' peut traverser la plaque *G* et atteindre l'intérieur de la gaine 700 juste après être sorti de l'extrémité proximale des tubes télescopiques *F*. Entre les deux plaques d'arrêt, *G* et *H*, un ressort de compression *SP* créé une force de répulsion.

Après avoir passé au travers de l'unité de pré-charge, le tendon 700' et la gaine 700 atteignent l'unité de motorisation. Cette unité de motorisation comporte une plaque de référence *K* sur laquelle le moteur *Mt* est fixé et sur laquelle l'extrémité proximale 700*b*II de la gaine 700 est en butée. Le tendon 700' traverse la plaque *K* et est fixé sur une poulie *J*. Cette poulie *J* guide le tendon le long d'un profil en spirale, donc à variation de rayon. Par le biais de cette forme spéciale de poulie, on peut éliminer le comportement non linéaire de la force de compression croissante du ressort *SP.* Ainsi, la commande de motorisation est plus aisée.

Si le moteur *Mt* tire sur le tendon 700', la plaque *H* de l'unité d'activation commence à rappeler le ressort de compression *SP.* Les tubes télescopiques *F* se contractent dans leur globalité. La libération du tendon 700' en sens contraire sur la poulie *J* permet l'allongement des tubes télescopiques *F*.

On va maintenant décrire de façon plus détaillée le mode de fixation à un opérateur *U* des différentes parties de l'exosquelette de bras *EXB* de l'invention, en se reportant de nouveau aux figures 1A et 1B, et aux figures 7A et 7B.

Pour rappel, l'exosquelette complet *EXB* est attaché au thorax *TH* d'un opérateur *U*. Deux plaques rigides, 40 et 41, fournissent une structure rigide de référence pour l'exosquelette *EXB.* Les deux plaques, 40 et 41, sont attachées ensembles autour du thorax humain *TH* au moyen de courroies 42, avantageusement en tissus auto-accrochant. Le bras maître d'exosquelette est vissé sur la plaque avant à l'aide de la pièce de fixation 33 (figures 5A et 5B) et, par conséquent, utilise le thorax humain *TH* comme référence.

En ce qui concerne les fixations sur le bras *BS* et l'avant bras *AB*, on utilise, comme il a été rappelé, des coussins annulaires gonflables.

Les figures 7A et 7B illustrent, en coupe sagittale, les coussins annulaires gonflables des sous-ensembles d'épaule 3 (coussin 30) et de coude 2 ou de poignet 1 (coussin 28), respectivement, comme le montre aussi la figure 2.

Les coussins annulaires gonflables, 30 et 28, sont insérés dans deux anneaux rigides externes, 31 et 240 respectivement. De façon avantageuse, ces coussins annulaires gonflables peuvent être réalisés en caoutchouc de silicone et peuvent être gonflés à l'aide de pompes qui peuvent être déconnectées à l'aide d'attaches rapides. Une fois gonflés, les anneaux créent une fixation non glissante entre le bras humain, *BS* ou *AB,* et les anneaux rigides externes. Les anneaux rigides externes constituent les fixations pour l'assemblage de coude.

Pour réduire les frottements à chaque articulation et augmenter de ce fait l'efficacité du système global, chaque axe est équipé avantageusement de roulements à billes, par exemple les roulements à billes référencés 242 sur la figure 7B. Ainsi, les mécanismes suivent chaque mouvement humain de bras supérieur *BS,* d'avant-bras *AB* et de poignet *P* sans entraves.

Dans un exemple de réalisation pratique de l'exosquelette de bras *EXB* (figure 1A) conforme à l'invention, celui-ci a été conçu pour être le plus léger et le plus rigide possible. Pour ce faire, la majorité des pièces a été réalisée avantageusement à base d'aluminium et, dans la mesure du possible, à base de plastiques (chlorure polyvinylique de PVC par exemple). Les grandes pièces structurelles destinées à enfermer le bras *Bd* (ou *Bg*) de l'opérateur *U* ont été réalisées avantageusement à base de composés de fibre de carbone pour réduire le poids et en même temps pour augmenter la rigidité de la structure rigide d'exosquelette *EXB.*

La dernière interface au bras humain *Bd* (ou *Bg*) est l'attache d'extrémité distale d'exosquelette à la paume de l'opérateur *U* (voir Figure 3A par exemple). Comme il a été décrit, l'opérateur *U* porte un gant rigide 5 de paume comportant des ouvertures 51 et 52 et fixé sur la paume avec du tissu auto-accrochant 53. L'utilisation d'une telle interface permet de maintenir libres tous les doigts de l'opérateur *U*. Par conséquent une interface additionnelle de type haptique peut être utilisée : par exemple un "cyber gant" ou une "cyber-poignée".

A la lecture de ce qui précède, on constate aisément que l'invention atteint bien les buts qu'elle s'est fixés.

L'exosquelette de bras conforme à l'invention apporte, comme il a été rappelé, de nombreux avantages, qu'il est inutile de rappeler.

Ceci est dû, d'une part à la conception originale de la cinématique, qui ne tente pas d'imiter la cinématique humaine. Ceci est dû, d'autre part, à l'utilisation de tendons à câble pour actionner les articulations actives. Ceci est dû enfin à la mise en oeuvre de coussins gonflables, ce qui permet une grande adaptabilité de l'exosquelette, sans nécessité de réglages long et fastidieux : l'ajustement de deux organes à vis ou similaire, situés dans les tubes télescopiques, est typiquement suffisant pour assurer une adaptation *in situ* de l'exosquelette de bras à un large pourcentage de sujets (typiquement une gamme de pourcentages précitée).

Il doit être clair cependant que l'invention n'est pas limitée aux seuls exemples de réalisations explicitement décrits, notamment en relation avec les figures 1A à 7B.

De même, bien que l'invention ait été décrite dans le cadre de son application préférée, à savoir la télécommande d'un robot de type humanoïde travaillant à l'extérieur d'une station spatiale, il est clair que l'invention n'est nullement limitée à cette application.

Tout au contraire, elle trouve application dans de nombreux domaines, et, de façon non exhaustive, dans les domaines suivants :
- télécommande très précise de robots réels ou virtuels pour des opérations nucléaires, pour des opérations de type dit "offshore", pour le déminage, pour des manipulations de matériaux dangereux, pour des travaux de décontamination biologique, etc. ;
- ré-éducation de personnes présentant des altérations temporaires du bras : l'exosquelette est utilisé pour de la gymnastique passive ;
- mise en action de prothèses passives pour des personnes handicapées, les commandes étant effectuées par la voix ou par transmission d'impulsions nerveuses ;
- entraînement divertissant de la forme physique : en complément de lunettes vidéo, l'exosquelette peut fournir au bras un jeu d'exercices de forme physique ;
- entraînement de la forme physique d'astronautes en orbite, en mission de longue durée : l'utilisation est semblable à celle rappelée ci-dessus, mais plus précisément avec comme but de combattre le dépérissement des os et des muscles ;
- augmentation de la force pour des personnes qui souffrent de déficience musculaire ;
- animation réaliste de personnages virtuels pour l'industrie de la télévision et/ou du cinéma : le mouvement du bras d'un personnage suit celui de l'animateur, fournissant un comportement sans heurt et très naturel ;
- jeux vidéo dits en immersion ;
- enseignement de la robotique industrielle, par exemple pour des tâches de haute précision et des tâches à échelle réduite, telles que des assemblages de robotique pour des systèmes micro-électro-mécaniques (dits "MEMS" selon la terminologie anglo-saxonne) ou des technologies micro-et-Nano (dites "MNT" selon la terminologie anglo-saxonne) ; et
- entraînement d'astronautes en environnement virtuel.

## Revendications

1. Exosquelette de bras destiné à acquérir des données représentatives de mouvements des articulations de bras d'un corps humain à l'aide de capteurs de mesure et/ou destiné à appliquer des couples à l'aide d'unités d'activation associées à au moins une partie desdites articulations, ledit exosquelette comprenant un premier dispositif ayant la conformation d'une manche, destinée à être enfilée sur au moins un desdits bras (Bd), de façon à former une chaîne cinématique d'articulations (1, 2, 3) disposé parallèlement aux dites articulations de bras, ledit dispositif comprenant un premier sous-ensemble dit exosquelette d'épaule (3) comprenant un premier nombre déterminé d'articulations associées aux articulations d'épaule dudit corps humain (U), un deuxième sous-ensemble dit exosquelette de coude (2) comprenant un deuxième nombre déterminé d'articulations associées aux articulations de coude dudit corps humain (U) et un troisième sous-ensemble dit exosquelette de poignet (1) comprenant un troisième nombre déterminé d'articulations associées aux articulations de poignet dudit corps humain (U), la somme des premier, deuxième et troisième nombres déterminés d'articulations étant égal à seize, de manière à autoriser seize degrés de liberté, et lesdites unités d'activation étant commandées par des tendons flexibles (7) courant le long desdits sous-ensembles, lesdits premier à troisième sous-ensembles étant mécaniquement dissociés de manière à pouvoir être commandés individuellement par lesdits tendons flexibles (7), et ledit exosquelette comprenant un deuxième dispositif, formant support (4), porté par le thorax (TH) dudit corps humain (U), comprenant une plaque rigide avant, dite de poitrine (40), et une plaque rigide arrière, dite de dos (41), et ledit exosquelette d'épaule (3) est fixé en son extrémité proximale à ladite plaque avant (40), celle-ci fournissant une référence fixe pour tout mouvement dudit exosquelette (EXB).

2. Exosquelette selon la revendication 1, **caractérisé en ce que** ledit exosquelette de poignet (1) est rendu solidaire en son extrémité distale à une main (M) dudit corps humain (U).

3. Exosquelette selon la revendication 2, **caractérisé en ce que** lesdits tendons flexibles (7) comprennent des câbles (700') enfilés dans des gaines de guidage de type spiralé (700) et **en ce qu'**ils sont actionnés par des unités de commande motorisées (Mt) disposées sur ladite plaque rigide de dos.

4. Exosquelette selon la revendication 1, **caractérisé en ce que** ledit exosquelette d'épaule (3) comprend six articulations ("articulation 31" - "articulation 36") associées chacune à un axe (DELTA 31 à DELTA 36), et **en ce que** lesdites première, deuxième, quatrième, cinquième et sixième articulations sont de type rotoïde et ladite troisième articulation est de type prismatique.

5. Exosquelette selon la revendication 4, **caractérisé en ce que** ledit exosquelette d'épaule (3) comprend un premier organe (34) réalisant ladite fixation à ladite plaque rigide de poitrine (40) et associée à des première et deuxième articulations de type rotoïde ("articulation 31", "articulation 32").

6. Exosquelette selon la revendication 5, **caractérisé en ce que** ledit exosquelette d'épaule (3) comprend un deuxième organe muni d'un coussin gonflable (30) enfilé sur la partie supérieure (BS) dudit bras (Bd), de manière à bloquer ledit exosquelette d'épaule (3) sur celle-ci, **en ce que** ledit coussin gonflable (30) est enserré dans une pièce annulaire (31) disposée entre les extrémités des branches d'une pièce en forme de "U" (32), et **en ce que** lesdites extrémités sont associées à des troisième et quatrième articulations de type rotoïde ("articulation 34", "articulation 35").

7. Exosquelette selon la revendication 6, **caractérisé en ce que** ledit exosquelette d'épaule (3) comprend un troisième organe muni d'un tube télescopique (332) entouré par un ressort de pré-tension (SP), **en ce que** ledit troisième organe est fixé par une première extrémité, en rotation libre autour de l'axe (DELTA 32) de ladite deuxième articulation ("articulation 32"), au dit premier organe, et par une seconde extrémité, en un point de la base dudit "U" (32), ledit point de fixation formant la cinquième articulation de type rotoïde "articulation 35"), **en ce que** ledit troisième organe forme ladite articulation prismatique ("articulation 33"), et **en ce que** ledit ressort (SP) est actionné par un desdits tendons à câble (733') exerçant une force sur celui-ci, de manière à le compresser ou l'allonger, selon le sens de ladite force exercée.

8. Exosquelette selon la revendication 4, **caractérisé en ce que** lesdites première, deuxième ("articulation 32") et sixième ("articulation 36") articulations, de type rotoïde, dites actives, sont actionnées par des tendons flexibles déterminés, et **en ce que** les lesdites quatrième ("articulation 34") et cinquième ("articulation 35") articulations, de type rotoïde, dites passives, ne sont actionnées par aucun desdits tendons flexibles.

9. Exosquelette selon la revendication 1, **caractérisé en ce que** ledit exosquelette de coude (2) comprend quatre articulations ("articulation 21" - "articulation 24") associées chacune à un axe de rotation (DELTA 211 à DELTA 24), et **en ce que** lesdites première ("articulation 21"), troisième ("articulation 23") et quatrième ("articulation 24") articulations sont de type rotoïde et ladite deuxième articulation ("articulation 22") est de type prismatique.

10. Exosquelette selon la revendication 9, **caractérisé en ce que** ledit exosquelette de coude (2) comprend un premier organe comportant une première pièce (204), de forme annulaire, et une seconde pièce (205), en forme de fer à cheval, assujetties l'une à l'autre par des tubes télescopiques (200, 202), réglables en longueur au moyen d'un dispositif à vis, lesdites première (204) et seconde (205) pièces étant enfilées au-dessus dudit coude (C), sur la partie supérieure(BS) dudit bras (Bd).

11. Exosquelette selon la revendication 10, **caractérisé en ce que** ledit exosquelette de coude (2) comprend un deuxième organe comportant une troisième pièce (210), en forme de fer à cheval, assujettie à ladite deuxième pièce (205), en forme de fer à cheval, par une pièce intermédiaire, ladite troisième pièce étant enfilée en dessous dudit coude (C), sur l'avant-bras (AB) dudit bras (Bd).

12. Exosquelette selon la revendication 4, **caractérisé en ce que** lesdites première ("articulation 21") et quatrième ("articulation 24") articulations, de type rotoïde, dites actives, sont actionnées par des tendons flexibles déterminés, et **en ce que** les lesdites deuxième ("articulation 22") et troisième ("articulation 23") articulations, dites passives, ne sont actionnées par aucun desdits tendons flexibles.

13. Exosquelette selon la revendication 1, **caractérisé en ce que** ledit exosquelette de poignet (1) comprend six articulations ("articulation 11" - "articulation 16") associées chacune à un axe de rotation (DELTA 11 à DELTA 16), et **en ce que** lesdites première à sixième articulations ("articulation 11" - "articulation 16") sont de type rotoïde.

14. Exosquelette selon la revendication 13, **caractérisé en ce que** exosquelette de poignet (1) comprend un premier organe muni d'un coussin gonflable (28) enfilé sur un avant-bras (AB) dudit corps humain (U), près de la main (M), de manière à bloquer ledit exosquelette de poignet (1) sur celui-ci, **en ce que** ledit coussin gonflable (28) est enserré dans une pièce annulaire (240), et **en ce que** ledit premier organe est associé à ladite première articulation ("articulation 11 ").

15. Exosquelette selon la revendication 14, **caractérisé en ce que**, ladite main (M) étant insérée dans un gant rigide (5), ledit exosquelette de poignet (1) comprend un deuxième organe comprenant une pièce de fixation au dit gant rigide (5).

16. Exosquelette selon la revendication 15, **caractérisé en ce que** ledit gant rigide (5) comporte des ouvertures (51, 52) laissant le libre passage aux doigts de ladite main (M) et est muni de moyens de fixation constitués par un tissu de type auto-accrochant.

17. Exosquelette selon la revendication 15, **caractérisé en ce que** ledit exosquelette de poignet (1) comprend un troisième organe formant un dispositif de liaison mécanique articulée entre lesdits premier et deuxième organes, **en ce que** ledit dispositif comprend une pièce de fixation sur ladite pièce annulaire, ladite pièce de fixation étant associée à ladite deuxième articulation ("articulation 12"), et des première et seconde tiges (132, 143) de liaison articulées, en une première extrémité, autour d'une pièce intermédiaire, associée à ladite troisième articulation ("articulation 13"), **en ce que** ladite première tige (132) est assujettie, en une seconde extrémité, à ladite pièce de fixation sur ladite pièce annulaire, en rotation libre autour d'un axe (DELTA 13) associé à ladite troisième articulation ("articulation 13"), **en ce que** ladite seconde tige (143) est assujettie, en une seconde extrémité, à ladite pièce de fixation sur ledit gant rigide (5), en rotation libre autour d'un axe (DELTA 15) associé à ladite cinquième articulation ("articulation 15"), et **en ce que** ladite pièce de fixation au dit gant rigide (5) est associée en outre aux dites cinquième ("articulation 15") et sixième ("articulation 16") articulations.

18. Exosquelette selon la revendication 13, **caractérisé en ce que** lesdites première ("articulation 11"), deuxième ("articulation 12"), quatrième ("articulation 14") et sixième ("articulation 16") articulations, dites actives, sont actionnées par des tendons flexibles déterminés, et **en ce que** les lesdites troisième ("articulation 13") et cinquième ("articulation 15") articulations, dites passives, ne sont actionnées par aucun desdits tendons flexibles.

19. Exosquelette selon l'une quelconque des revendications 8, 12 ou 18, **caractérisé en ce que** lesdites articulations actives comprennent des poulies d'entraînement (R) d'axe de rotation (DELTA) confondus avec les axes desdites articulations et **en ce que** lesdites poulies (R) sont entraînées dans le sens des aiguilles d'une montre ou dans le sens inverse des aiguilles d'une montre par une paire de tendons flexibles (700'), de manière à induire un mouvement de rotation correspondant de l'articulation associée à ladite poulie (R).

20. Exosquelette selon la revendication 3, **caractérisé en ce qu'**il comprend des organes de pré-tension (8) soumettant lesdits tendons flexibles (700') à une force initiale d'amplitude prédéterminée, fraction d'une valeur maximale de charge à soutenir, et **en ce que** ces organes de pré-tension (8) sont disposés sur ledit exosquelette d'épaule (3).

21. Exosquelette selon la revendication 20, **caractérisé en ce que** lesdits organes de pré-tension (8) comprennent des vis de serrage/desserrage (C1) agissant sur des extrémités (700a) desdites gaines de guidage de câbles.

22. Exosquelette selon la revendication 3, **caractérisé en ce que** lesdites unités de commande actionnant lesdits tendons flexibles sont des moteurs à courant continu (Mt) disposés sur ladite plaque rigide de dos (41).

23. Exosquelette selon la revendication 1, **caractérisé en ce que** lesdites articulations sont munies de capteurs d'angle (Ca12 - Ca16, Ca21 - Ca23, Ca31 - Ca36, 218, 226) mesurant la rotation des axes associés à ces articulations.

24. Exosquelette selon la revendication 2, **caractérisé en ce que** lesdites plaques de poitrine (40) et de dos (42) dudit support (4) sont attachées entre elles par des sangles en tissu de type auto-accrochant (42).

25. Application d'un exosquelette de bras selon l'une quelconque des revendications précédentes à la télécommande d'un robot de type humanoïde travaillant à l'extérieur d'une station spatiale muni de bras artificiels et effectuant des tâches sous la commande d'un corps humain, ledit exosquelette de bras (EXB) étant enfilé sur au moins l'un de ses bras (Bd), ledit robot recevant des données forçant l'exécution de mouvements en relation biunivoque avec des mouvements de bras (Bd) et transmettant des données dites de rétroaction forçant l'exécution de mouvements de tout ou partie desdites articulations dudit exosquelette de bras (EXB) et entraînant des mouvements correspondants de bras (Bd).

## Claims

1. Arm exoskeleton intended to acquire data representing movements of arm joints of a human body by means of measuring sensors and/or intended to apply torques by means of actuation units associated with at least part of said joints, said exoskeleton comprising a first device having the conformation of a sleeve, intended to be fitted over at least one of said arms (Bd), so as to form a kinematic chain of joints (1,2,3) arranged parallel to said arm joints, said device comprising a first sub-assembly called shoulder exoskeleton (3) comprising a first determined number of joints associated with the shoulder joints of said human body (U), a second sub-assembly called elbow exoskeleton (2) comprising a second determined number of joints associated with the elbow joints of said human body (U), and a third sub-assembly called wrist exoskeleton (1) comprising a third determined number of joints associated with the wrist joints of said human body (U), the sum of the first, second and third determined numbers of joints being equal to sixteen, so as to allow sixteen degrees of freedom, and said actuation units being controlled by flexible tendons (7) lying along the length of said sub-assemblies, said first to third sub-assemblies being mechanically separated so that they are able to be controlled individually by said flexible tendons (7), and said exoskeleton comprising a second device forming a support (4) carried by the thorax (TH) of said human body (U) comprising a rigid front plate called a chest plate (40) and a rigid rear plate called a back plate (41), and said shoulder exoskeleton (3) is secured at its proximal end to said front plate (40) this front plate providing a fixed reference for every movement of said exoskeleton (EXB).

2. Exoskeleton according to claim 1, **characterized in that** said wrist exoskeleton (1) is joined at its distal end to a hand (M) of said human body (U).

3. Exoskeleton according to claim 2, **characterized in that** said flexible tendons (7) comprise cables (700') threaded through guide sheaths of coil type (700) and **in that** they are actuated by motorized control units (Mt) arranged on said rigid back plate.

4. Exoskeleton according to claim 1, **characterized in that** said shoulder exoskeleton (3) comprises six joints ("joint 31" - "joint 36") each associated with an axis (DELTA 31 to DELTA 36) and **in that** said first, second, fourth, fifth and sixth joints are of rotary type and said third joint is of prismatic type.

5. Exoskeleton according to claim 4, **characterized in that** said shoulder exoskeleton (3) comprises a first member (34)ensuring said securing to said rigid chest plate (40) and associated with first and second joints of rotary type ("joint 31", "joint 32").

6. Exoskeleton according to claim 5, **characterized in that** said shoulder exoskeleton (3) comprises a second member provided with an inflatable cushion (30) fitted over the upper part (BS) of said arm (Bd) so as to lock said shoulder exoskeleton (3) thereupon, **in that** said inflatable cushion (30) is tightly enclosed inside an annular part (31) arranged between the branch ends of a U-shaped part (32) and **in that** said ends are associated with third and fourth joints of rotary type ("joint 34", "joint 35").

7. Exoskeleton according to claim 6, **characterized in that** said shoulder exoskeleton (3) comprises a third member provided with a telescopic tube (332) surrounded by a pre-tensioning spring (SP), **in that** said third member is secured via a first end, in free rotation about the axis (DELTA 32) of said second joint ("joint 32"), to said first member, and via a second end to a base point of said "U" (32), said securing point forming the fifth joint of rotary type ("joint 35"), **in that** said third member forms said prismatic joint ("joint 33") and **in that** said spring (SP) is actuated by one of said cable tendons (733") exerting a force thereupon for its compression or elongation depending on the direction of said exerted force.

8. Exoskeleton according to claim 4, **characterized in that** said first, second ("joint 32") and sixth ("joint 36") joints, of rotary type and called active, are actuated by determined flexible tendons, and **in that** said fourth ("joint 34") and fifth ("joint 35") joints of rotary type and called passive are not actuated by any of said flexible tendons.

9. Exoskeleton according to claim 1, **characterized in that** said elbow exoskeleton (2) comprises four joints ("joint 21" - "joint 24") each associated with an axis of rotation (DELTA 21 to DELTA 24) and **in that** said first ("joint 21"), third ("joint 23") and fourth ("joint 24") joints are of rotary type and said second joint ("joint 22") is of prismatic type.

10. Exoskeleton according to claim 9, **characterized in that** said elbow exoskeleton (2) comprises a first member comprising a first part (204) of annular shape, and a second part (205) of horseshoe shape joined to each other via telescopic tubes (200, 202) whose length can be adjusted by means of a screw device, said first (204) and second (205) parts being fitted above said elbow (C) on the upper part (BS) of said arm (Bd).

11. Exoskeleton according to claim 10, **characterized in that** said elbow exoskeleton (2) comprises a second member comprising a third part (210) of horseshoe shape, joined to said second part (205) of horseshoe shape by an intermediate part, said third part being fitted below said elbow (C) on the forearm (AB) of said arm (Bd).

12. Exoskeleton according to claim 4, **characterized in that** said first ("joint 21") and fourth ("joint 24") joints of rotary type called active joints are actuated by determined flexible tendons, and **in that** said second ("(joint 22") and third ("joint 23") joints called passive joints are not actuated by any of said flexible tendons.

13. Exoskeleton according to claim 1, **characterized in that** said wrist exoskeleton (1) comprises six joints ("joint 11" - "joint 16") each associated with an axis of rotation (DELTA 11 to DELTA 16), and **in that** said first to sixth joints ("joint 11" - "joint 16") are of rotary type.

14. Exoskeleton according to claim 13, **characterized in that** the wrist exoskeleton (1) comprises a first member provided with an inflatable cushion (28) fitted over a forearm (AB) of said human body (U) close to the hand (M) so as to lock said wrist exoskeleton (1) thereupon, **in that** said inflatable cushion (28) is tightly surrounded by an annular part (240), and **in that** said first member is associated with said first joint ("joint 11").

15. Exoskeleton according to claim 14 **characterized in that**, said hand (M) being inserted inside a rigid glove (5), said wrist exoskeleton (1) comprises a second member comprising a securing part to said rigid glove (5) .

16. Exoskeleton according to claim 15, **characterized in that** said rigid glove (5) comprises openings (51, 52) for free passing of the fingers of said hand (M) and is provided with securing means consisting of a fabric of self-cling type.

17. Exoskeleton according to claim 15, **characterized in that** said wrist exoskeleton (1) comprises a third member forming a jointed mechanical link device between said first and second members, **in that** said device comprises a securing part on said annular part, said securing part being associated with said second joint ("joint 12"), and first and second link rods (132, 143) jointed at a first end around an intermediate part associated with said third joint ("joint 13"), **in that** said first rod (132) is joined at a second end to said securing part on said annular part in free rotation about an axis (DELTA 13) associated with said third joint ("joint 13"), **in that** said second rod (143) is joined at a second end to said securing part on said rigid glove (5) in free rotation about an axis (DELTA 15) associated with said fifth joint ("joint 15"), and **in that** said securing part to said rigid glove (5) is associated also with said fifth("joint 15") and sixth ("joint 16") joints.

18. Exoskeleton according to claim 13, **characterized in that** said first ("joint 11"), second ("joint 12"), fourth ("joint 14") and sixth ("joint 16") so-called active joints are actuated by determined flexible tendons, and **in that** said third ("joint 13") and fifth ("joint 15") so-called passive joints are not actuated by any of said flexible tendons.

19. Exoskeleton according to any of claims 8, 12 or 18, **characterized in that** said active joints comprise driving pulleys (R) of rotational axis (DELTA) merged with the axes of said joints, and **in that** said pulleys (R) are driven in clockwise direction or anti-clockwise direction by a pair of flexible tendons (700') so as to induce a corresponding rotational movement of the joint associated with said pulley (R).

20. Exoskeleton according to claim 3, **characterized in that** it comprises pre-tensioning members (8) subjecting said flexible tendons (700') to an initial force of predetermined amplitude, a fraction of a maximum load to be supported, and **in that** these pre-tensioning members (8) are arranged on said shoulder exoskeleton (3).

21. Exoskeleton according to claim 20, **characterized in that** said pre-tensioning members (8) comprise clamping/unclamping screws (C1) acting upon ends (700a) of said cable guide sheaths.

22. Exoskeleton according to claim 3, **characterized in that** said control units actuating said flexible tendons are direct current motors (Mt) arranged on said rigid back plate (41).

23. Exoskeleton according to claim 1, **characterized in that** said joints are provided with angle sensors (Ca12-Ca16, Ca21-Ca23, Ca31-Ca36, 218, 226) measuring the rotation of the axes associated with these joints.

24. Exoskeleton according to claim 2, **characterized in that** said chest (40) and back (42) plates of said support (4) are attached together by straps in fabric of self-cling type (42).

25. Application of an arm exoskeleton according to any of the preceding claims to the remote control of a robot of humanoid type working outside a space station, provided with artificial arms and conducting tasks under the control of a human body, said arm exoskeleton (EXB) being fitted over at least one of its arms (Bd), said robot receiving data forcing the execution of movements in bijective relationship with movements of arms (Bd) and transmitting so-called retroaction data forcing the execution of movements of all or part of said joints of said arm exoskeleton (EXB) and inducing corresponding arm (Bd) movements.

## Patentansprüche

1. Exoskelett für einen Arm, das dazu bestimmt ist, für Bewegungen der Armgelenke eines menschlichen Körpers repräsentative Daten mit Hilfe von Messwertgebern zu erfassen und/oder Kraftmomente mit Hilfe von zumindest einem Teil der Gelenke zugeordneten Aktivierungseinheiten aufzubringen, wobei das Exoskelett eine erste Vorrichtung in Gestalt eines Ärmels aufweist, der dazu bestimmt ist, auf zumindest einen der Arme (Bd) aufgeschoben zu werden, so dass eine kinematische Gelenkkette (1, 2, 3) entsteht, die parallel zu den Armgelenken angeordnet ist, wobei die Vorrichtung eine Schulterexoskelett (3) genannte erste Baugruppe mit einer bestimmten ersten Anzahl von den Schultergelenken des menschlichen Körpers (U) zugeordneten Gelenken, eine Ellbogenexoskelett (2) genannte zweite Baugruppe mit einer bestimmten zweiten Anzahl von den Ellbogengelenken des menschlichen Körpers (U) zugeordneten Gelenken und eine Handgelenkexoskelett (1) genannte dritte Baugruppe mit einer bestimmten dritten Anzahl von dem Handgelenk des menschlichen Körpers (U) zugeordneten Gelenken aufweist, wobei die Summe der bestimmten ersten, zweiten und dritten Anzahl von Gelenken gleich sechzehn ist, so dass sechzehn Freiheitsgrade möglich sind, und wobei die Aktivierungseinheiten über flexible Bänder (7) gesteuert werden, die entlang der Baugruppen verlaufen, wobei die erste bis dritte Baugruppe mechanisch voneinander getrennt sind, so dass sie einzeln über die flexiblen Bänder (7) gesteuert werden können, und wobei das Exoskelett eine zweite Vorrichtung aufweist, die einen vom Brustkorb (TH) des menschlichen Körpers (U) getragenen Stützträger (4) bildet, welcher eine starre vordere Platte, die sogenannte Brustplatte (40), und eine starre hintere Platte, die sogenannte Rückenplatte (41), aufweist, und das Schulterexoskelett (3) mit seinem proximalen Ende an der vorderen Platte (40) befestigt ist, wobei diese eine feste Referenz für jegliche Bewegung des Exoskeletts (EXB) bietet.

2. Exoskelett nach Anspruch 1, **dadurch gekennzeichnet, dass** das Handgelenkexoskelett (1) an seinem distalen Ende mit einer Hand (M) des menschlichen Körpers (U) verbunden ist.

3. Exoskelett nach Anspruch 2, **dadurch gekennzeichnet, dass** die flexiblen Bänder (7) Kabel (700') aufweisen, die in spiralförmigen Führungshüllen (700) verlaufen, und dass sie über motorisierte Steuereinheiten (Mt) betätigt werden, die an der starren Rückenplatte angeordnet sind.

4. Exoskelett nach Anspruch 1, **dadurch gekennzeichnet, dass** das Schulterexoskelett (3) sechs Gelenke ("Gelenk 31" - "Gelenk 36") aufweist, die jeweils einer Achse (DELTA 31 bis DELTA 36) zugeordnet sind, und dass das erste, zweite, vierte, fünfte und sechste Gelenk Drehgelenke sind und das dritte Gelenk ein Schubgelenk ist.

5. Exoskelett nach Anspruch 4, **dadurch gekennzeichnet, dass** das Schulterexoskelett (3) ein erstes Glied (34) aufweist, das die Befestigung an die starre Brustplatte (40) gewährleistet und einem ersten und zweiten Drehgelenk ("Gelenk 31", "Gelenk 32") zugeordnet ist.

6. Exoskelett nach Anspruch 5, **dadurch gekennzeichnet, dass** das Schulterexoskelett (3) ein zweites Glied aufweist, das mit einem Luftsack (30) ausgestattet ist, der auf den oberen Bereich (BS) des Arms (Bd) aufgeschoben ist, so dass er das Schulterexoskelett (3) an diesem sichert, dass der Luftsack (30) von einem ringförmigen Teil (31) umschlossen wird, das zwischen den Enden der Schenkel eines "U"-förmigen Teils (32) angeordnet ist, und dass die Enden dem dritten und vierten Drehgelenk ("Gelenk 34", "Gelenk 35") zugeordnet sind.

7. Exoskelett nach Anspruch 6, **dadurch gekennzeichnet, dass** das Schulterexoskelett (3) ein drittes Glied aufweist, das mit einem Teleskopauszug (332) ausgestattet ist, der von einer Vorspannfeder (SP) umgeben wird, dass das dritte Glied mit einem ersten Ende um die Achse (DELTA 32) des zweiten Gelenks ("Gelenk 32") frei drehbar am ersten Glied und mit einem zweiten Ende an einem Punkt des Mittelstegs der "U"-Form (32) befestigt ist, wobei der Befestigungspunkt das fünfte Drehgelenk ("Gelenk 35") bildet, dass das dritte Glied das Schubgelenk ("Gelenk 33") bildet und dass die Feder (SP) über eines der Kabelbänder (733') betätigt wird, das auf diese eine Kraft so ausübt, dass sie je nach Richtung der ausgeübten Kraft zusammengedrückt oder auseinander gezogen wird.

8. Exoskelett nach Anspruch 4, **dadurch gekennzeichnet, dass** das erste, zweite ("Gelenk 32") und sechste Drehgelenk ("Gelenk 36"), sogenannte aktive Gelenke, über bestimmte flexible Bänder betätigt werden und dass das vierte ("Gelenk 34") und fünfte Drehgelenk ("Gelenk 35"), sogenannte passive Gelenke, über keines der flexiblen Bänder betätigt werden.

9. Exoskelett nach Anspruch 1, **dadurch gekennzeichnet, dass** das Ellbogenexoskelett (2) vier Gelenke ("Gelenk 21" - "Gelenk 24") aufweist, die jeweils einer Drehachse (DELTA 211 bis DELTA 24) zugeordnet sind, und dass das erste ("Gelenk 21"), dritte (Gelenk 23") und vierte Gelenk ("Gelenk 24") Drehgelenke sind und das zweite Gelenk ("Gelenk 22") ein Schubgelenk ist.

10. Exoskelett nach Anspruch 9, **dadurch gekennzeichnet, dass** das Ellbogenexoskelett (2) ein erstes Glied mit einem ersten Teil (204) in Ringform und einem zweiten Teil (205) in Hufeisenform aufweist, die über Teleskopauszüge (200, 202) miteinander verbunden sind, welche mittels einer Schraubvorrichtung in der Länge verstellbar sind, wobei das erste (204) und das zweite Teil (205) über den Ellbogen (C) auf den oberen Bereich (BS) des Arms (Bd) aufgeschoben sind.

11. Exoskelett nach Anspruch 10, **dadurch gekennzeichnet, dass** das Ellbogenoxoskelett (2) ein zweites Glied mit einem dritten Teil (210) in Hufeisenform aufweist, das über ein Zwischenstück mit dem hufeisenförmigen zweiten Teil (205) verbunden ist, wobei das dritte Teil über den Ellbogen (C) auf den Unterarm (AB) des Arms (Bd) aufgeschoben ist.

12. Exoskelett nach Anspruch 4, **dadurch gekennzeichnet, dass** das erste ("Gelenk 21") und das vierte Drehgelenk ("Gelenk 24"), die sogenannten aktiven Gelenke, über bestimmte flexible Bänder betätigt werden und dass das zweite ("Gelenk 22") und das dritte Gelenk ("Gelenk 23"), die sogenannten passiven Gelenke, über keines der flexiblen Bänder betätigt werden.

13. Exoskelett nach Anspruch 1, **dadurch gekennzeichnet, dass** das Handgelenkexoskelett (1) sechs Gelenke ("Gelenk 11" - "Gelenk 16") aufweist, die jeweils einer Drehachse (DELTA 11 bis DELTA 16) zugeordnet sind, und dass das erste bis sechste Gelenk ("Gelenk 11" - "Gelenk 16") Drehgelenke sind.

14. Exoskelett nach Anspruch 13, **dadurch gekennzeichnet, dass** das Handgelenkexoskelett (1) ein erstes Glied aufweist, das mit einem Luftsack (28) ausgestattet ist, der auf einen Unterarm (AB) des menschlichen Körpers (U) nahe der Hand (M) aufgeschoben ist, so dass er das Handgelenkexoskelett (1) an diesem sichert, dass der Luftsack (28) in ein ringförmiges Teil (240) eingesetzt ist und dass das erste Glied dem ersten Gelenk ("Gelenk 11") zugeordnet ist.

15. Exoskelett nach Anspruch 14, **dadurch gekennzeichnet, dass** bei in einen starren Handschuh (5) eingefügter Hand (M) das Handgelenkexoskelett (1) ein zweites Glied mit einem Teil zum Befestigen am starren Handschuh (5) aufweist.

16. Exoskelett nach Anspruch 15, **dadurch gekennzeichnet, dass** der starre Handschuh (5) Öffnungen (51, 52) enthält, die den Fingern der Hand (M) freien Durchtritt gewähren, und mit Befestigungsmitteln versehen ist, die aus einem selbstverhakenden Gewebe bestehen.

17. Exoskelett nach Anspruch 15, **dadurch gekennzeichnet, dass** das Handgelenkexoskelett (1) ein drittes Glied aufweist, das eine mechanische Verbindungsvorrichtung bildet, die zwischen dem ersten und dem zweiten Glied angelenkt ist, dass die Vorrichtung ein Teil zur Befestigung am ringförmigen Teil aufweist, wobei das Befestigungsteil dem zweiten Gelenk ("Gelenk 12") zugeordnet ist, sowie einen ersten und einen zweiten Verbindungsstift (132, 143), die mit einem ersten Ende um ein dem dritten Gelenk ("Gelenk 13") zugeordnetes Zwischenstück angelenkt sind, dass der erste Stift (132) an einem zweiten Ende mit dem Teil zur Befestigung am Ringteil verbunden ist, das um eine dem dritten Gelenk ("Gelenk 13") zugeordnete Achse (DELTA 13) frei drehbar ist, dass der zweite Stift (143) an einem zweiten Ende mit dem Teil zur Befestigung an dem starren Handschuh (5) verbunden ist, das um eine dem fünften Gelenk ("Gelenk 15") zugeordnete Achse (DELTA 15) frei drehbar ist, und dass das Teil zur Befestigung am starren Handschuh (5) ferner dem fünften ("Gelenk 15") und sechsten Gelenk ("Gelenk 16") zugeordnet ist.

18. Exoskelett nach Anspruch 13, **dadurch gekennzeichnet, dass** das erste ("Gelenk 11"), zweite ("Gelenk 12"), vierte ("Gelenk 14") und sechste Gelenk ("Gelenk 16"), sogenannte aktive Gelenke, über bestimmte flexible Bänder betätigt werden und dass das dritte ("Gelenk 13") und fünfte Gelenk ("Gelenk 15"), sogenannte passive Gelenke, über keines der flexiblen Bänder betätigt werden.

19. Exoskelett nach einem der Ansprüche 8, 12 oder 18, **dadurch gekennzeichnet, dass** die aktiven Gelenke Antriebsscheiben (R) aufweisen, deren Drehachsen (DELTA) mit den Gelenkachsen zusammenfallen und dass die Antriebsscheiben (R) über ein Paar von flexiblen Bändern (700') in Uhrzeigerrichtung bzw. in Gegenuhrzeigerrichtung angetrieben werden, so dass sie eine entsprechende Drehbewegung des der Antriebsscheibe (R) zugeordneten Gelenks erzeugen.

20. Exoskelett nach Anspruch 3, **dadurch gekennzeichnet, dass** es Vorspannglieder (8) aufweist, welche die flexiblen Bänder (700') mit einer Anfangskraft vorbestimmter Höhe beaufschlagen, die Bruchteil eines abzustützenden Lasthöchstwertes ist, und dass diese Vorspannglieder (8) an dem Schulterexoskelett (3) angeordnet sind.

21. Exoskelett nach Anspruch 20, **dadurch gekennzeichnet, dass** die Vorspannglieder (8) Spann-/Löseschrauben (C1) aufweisen, die auf die Enden (700a) der Kabelführungshüllen einwirken.

22. Exoskelett nach Anspruch 3, **dadurch gekennzeichnet, dass** die die flexiblen Bänder betätigenden Steuereinheiten Gleichstrommotoren (Mt) sind, die an der starren Rückenplatte (41) angeordnet sind.

23. Exoskelett nach Anspruch 1, **dadurch gekennzeichnet, dass** die Gelenke mit Winkelmessern (Ca12 - Ca16, Ca21 - Ca23, Ca31 - Ca36, 218, 226) ausgestattet sind, mit welchen die Drehung der diesen Gelenken zugeordneten Achsen gemessen wird.

24. Exoskelett nach Anspruch 2, **dadurch gekennzeichnet, dass** die Brust-(40) und Rückenplatte (42) des Stützträgers (4) über Riemen aus selbstverhakendem Gewebe (42) aneinander befestigt sind.

25. Anwendung eines Exoskeletts für einen Arm nach einem der vorangehenden Ansprüche zur Fernsteuerung eines humanoiden Roboters, der außerhalb einer Raumstation arbeitet, mit künstlichen Armen versehen ist und Aufgaben unter dem Kommando eines menschlichen Körpers ausführt, wobei das Armexoskelett (EXB) zumindest auf seinen einen Arm (Bd) aufgeschoben ist, wobei der Roboter Daten empfängt, welche die Ausführung von Bewegungen im eineindeutigen Verhältnis zu Bewegungen des Arms (Bd) bewirken und sogenannte Rückkopplungsdaten übertragen, welche die Ausführung von Bewegungen sämtlicher Gelenke bzw. eines Teils der Gelenke des Armexoskeletts (EXB) bewirken und entsprechende Bewegungen des Arms (Bd) hervorrufen.
